# EUROPEAN PATENT APPLICATION

(11) **EP 3 388 929 A1**
(43) Date of publication of application: **17.10.2018**
(21) Application number: 17196614.6
(22) Date of filing: 16.10.2017
(51) Int. Cl.: G06F 3/0481, G06T 19/00

(54) **DISCOVERING AUGMENTED REALITY ELEMENTS IN A CAMERA VIEWFINDER DISPLAY**

(30) Priority: 14.04.2017 US 201715487697; 01.05.2017 WO PCT/US2017/030460
(71) Applicant: Facebook, Inc., Menlo Park, CA 94025 (US)
(72) Inventor: BARNETT, John Samuel, Menlo Park, CA California 94025 (US); DAVIS, Dantley, Menlo Park, CA California 94025 (US)
(74) Representative: Schröer, Gernot H.

(57) **Abstract**

The present disclosure is directed toward systems and methods for utilizing augmented reality elements in connection with a camera viewfinder display of a mobile computing device. For example, systems and methods described herein detect characteristics of the mobile computing device and provide augmented reality elements that correspond to the detected characteristics directly in the camera viewfinder display. Thus, a user can interact with the provided augmented reality elements in the camera viewfinder display to compose a networking system post, view a friend's location, order and pay for merchandise, and so forth.

## Description

### BACKGROUND

Networking systems are increasingly reliant on visual media. For example, networking system users frequently include digital photographs and videos in networking system posts in order to make their posts more eye-catching and engaging. For instance, a networking system user may upload a networking system post including a picture of a dish from a new restaurant along with text detailing how the user enjoyed the dish. In another example, a networking system user may send pictures of his current location to his social networking "friends." In another example, a third-party (e.g., a news outlet, a sports broadcaster, a business or vendor) may upload media related to an event to the networking system such that networking system users can read additional information, be directed to a website to order event merchandise, listen to event commentary, and so forth.

Relying on pictures and videos within networking system posts to convey information inevitably leads to a disconnect between the information that is accessible within the networking system and what a networking system user experiences in real life. For example, if a networking system user is at a baseball game, he has to access the networking system in order to read other networking system user's posts related to the baseball game. Accordingly, the user must divide his attention between the baseball game and his computing device (e.g., a mobile phone, tablet, smart watch, etc.). In another example, when a group of friends are utilizing a social networking system to interact with each other while at a crowded club, they must continually view and send networking system messages, thus drawing their attention away from their current surroundings or companions.

Thus, there is a need for system that enables a networking system user to experience networking system information and features in a way that does not distract the user from real-life events.

### SUMMARY

One or more embodiments described herein provide benefits and/or solve one or more of the foregoing or other problems in the art with systems and methods for providing networking system content within augmented reality elements displayed in the camera viewfinder display of a user's mobile computing device. For example, systems and methods described herein generate augmented reality elements representing networking system content that is relevant to what a user is viewing through the camera viewfinder display of his mobile computing device. Thus, in one or more embodiments, the user can view networking system content in connection with a real-life scene through his camera viewfinder display.

Furthermore, one or more embodiments described herein provide benefits and/or solve one or more of the foregoing or other problems in the art with systems and methods for enabling a networking system user to create networking system augmented reality elements through the camera viewfinder display of the user's mobile computing device. For example, instead of simply writing a networking system post related to a location, systems and methods described herein enable a networking system user to create an augmented reality element related to the location. Thus, systems and methods described herein can provide the user's augmented reality element to other networking system users who are utilizing their mobile computing device camera at the same location.

Additional features and advantages of the present application will be set forth in the description which follows, and in part will be obvious from the description, or may be learned by the practice of such exemplary embodiments. The features and advantages of such embodiments may be realized and obtained by means of the instruments and combinations particularly pointed out in the appended claims. These and other features will become more fully apparent from the following description and appended claims, or may be learned by the practice of such exemplary embodiments as set forth hereinafter.

Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an embodiment according to the invention, a method may comprise:
determining a plurality of characteristics of a mobile computing device of a networking system user;
presenting, based on the plurality of characteristics of the mobile computing device, one or more augmented reality elements within a camera viewfinder display of the mobile computing device; and
composing, in response to a received interaction with at least one of the one or more augmented reality elements, a networking system post.

Determining the plurality of characteristics of the mobile computing device may comprise determining location information associated with the mobile computing device.

Determining the plurality of characteristics of the mobile computing device may comprise identifying a networking system unique identifier associated with the user of the mobile computing device.

In an embodiment according to the invention, a method may comprise:
providing the plurality of characteristics of the mobile computing device to a networking system; and
receiving, from the networking system, a set of augmented reality elements corresponding to one or more of the plurality of characteristics of the mobile computing device.

In an embodiment according to the invention, a method may comprise identifying a subset of the set of augmented reality elements, wherein identifying the subset may comprise:
calculating a score for each of the set of augmented reality elements; and
wherein the subset of augmented reality elements comprise a threshold number of top scoring augmented reality elements.

Calculating a score for each of the set of augmented reality elements may comprise, for each augmented reality element in the set of augmented reality elements, adding a weighted value to a score for the augmented reality element, wherein the weighted value represents a correlation between metadata associated with the augmented reality element and a plurality of display factors associated with the mobile computing device.

The plurality of display factors may comprise a resolution of a display of the mobile computing device, whether an image frame taken from the camera viewfinder display is crowded, and whether the user of the mobile computing device is likely to interact with the augmented reality element.

Presenting the one or more augmented reality elements within the camera viewfinder display may comprise presenting the subset of augmented reality elements.

Presenting one or more augmented reality elements within a camera viewfinder display of the mobile computing device may comprise presenting third party augmented reality elements that correspond with a location of the mobile computing device.

In an embodiment according to the invention, a method may comprise receiving an interaction with at least one of the one or more augmented reality elements, wherein receiving the interaction may comprise receiving a touch interaction with the camera viewfinder display of the mobile computing device.

In an embodiment according to the invention, a method may comprise in response to receiving the interaction with the at least one of the one or more augmented reality elements, providing one or more payment tools within the camera viewfinder display.

In an embodiment according to the invention, a method may comprise:
detecting a swipe touch gesture in connection with the camera viewfinder display; and
sending, in response to the detected swipe touch gesture, the composed networking system post.

In an embodiment according to the invention, a system may comprise:
at least one processor; and
at least one non-transitory computer-readable storage medium storing instructions thereon that, when executed by the at least one processor, cause the system to:
   determine a plurality of characteristics of a mobile computing device of a networking system user;
   present, based on the plurality of characteristics of the mobile computing device, one or more augmented reality elements within a camera viewfinder display of the mobile computing device; and
   compose, in response to a received interaction with at least one of the one or more augmented reality elements, a networking system post.

In an embodiment according to the invention, a system may comprise instructions that cause the system to:
provide the plurality of characteristics of the mobile computing device to a networking system; and
receive, from the networking system, a set of augmented reality elements corresponding to one or more of the plurality of characteristics of the mobile computing device.

In an embodiment according to the invention, a system may comprise instructions that cause the system to:
identify a subset of the set of augmented reality elements, wherein identifying the subset comprises:
   calculating a score for each of the set of augmented reality elements; and
   wherein the subset of augmented reality elements comprise a threshold number of top scoring augmented reality elements.

Calculating a score for each of the set of augmented reality elements may comprise, for each augmented reality element in the set of augmented reality elements, adding a weighted value to a score for the augmented reality element, wherein the weighted value represents a correlation between metadata associated with the augmented reality element and a plurality of display factors associated with the mobile computing device.

Presenting the one or more augmented reality elements within the camera viewfinder display may comprise presenting the subset of augmented reality elements.

In an embodiment according to the invention, a system may comprise instructions that cause the system to:
receive an interaction with at least one of the one or more augmented reality elements, wherein receiving the interaction comprises receiving a touch interaction with the camera viewfinder display of the mobile computing device; and
in response to receiving the interaction with the at least one of the one or more augmented reality elements, providing one or more payment tools within the camera viewfinder display.

In an embodiment according to the invention, a system may comprise instructions that cause the system to:
detect a swipe touch gesture in connection with the camera viewfinder display; and
send, in response to the detected swipe touch gesture, the composed networking system post.

In an embodiment according to the invention, a non-transitory computer-readable medium may store instructions thereon that, when executed by at least one processor, may cause a computer system to:
determine a plurality of characteristics of a mobile computing device of a networking system user;
present, based on the plurality of characteristics of the mobile computing device, one or more augmented reality elements within a camera viewfinder display of the mobile computing device; and
compose, in response to a received interaction with at least one of the one or more augmented reality elements, a networking system post.

In an embodiment according to the invention, a method may comprise:
maintaining, by one or more server devices, a plurality of augmented reality elements;
receiving, from a mobile computing device, characteristic data, wherein the characteristic data comprises characteristic data associated with the mobile computing device, and characteristic data associated with a user of the mobile computing device;
identifying, from the maintained plurality of augmented reality elements, one or more augmented reality elements that correspond to the received characteristic data; and
providing, to the mobile computing device and for display within a camera viewfinder display of the mobile computing device, the identified one or more augmented reality elements.

Maintaining the plurality of augmented reality elements further may comprise maintaining metadata for each of the plurality of augmented reality elements, wherein the metadata for each of the plurality of augmented reality elements comprises mapping requirements for each augmented reality element, and networking system information specific to each augmented reality element.

Characteristic data associated with the mobile computing device may comprise location information associated with the mobile computing device.

Characteristic data associated with the user of the mobile computing device may comprise one or more of a networking system unique identifier associated with the user of the mobile computing device, application usage history associated with the user of the mobile computing device, or contact information associated with the user of the mobile computing device.

Identifying one or more augmented reality elements that correspond to the received characteristic data may comprise:
analyzing the received characteristic data to determine a location of the mobile computing device; and
identifying one or more augmented reality elements that correspond to the location of the mobile computing device.

Analyzing the received characteristic data to determine the location of the mobile computing device may comprise analyzing one or more of GPS information, WiFi information, networking system information, or Internet searches in order to determine the location of the mobile computing device.

Identifying one or more augmented reality elements that correspond to the received characteristic data further may comprise:
analyzing the received characteristic data to determine user characteristics comprising demographic information associated with the user of the mobile computing device, networking system profile information associated with the user of the mobile computing device, networking system activity history associated with the user of the mobile computing device, and networking system activity history associated with one or more co-users of the user of the mobile computing device; and
identifying one or more augmented reality elements that correspond to the determined user characteristics.

Identifying one or more augmented reality elements that correspond to the received characteristic data further may comprise calculating a score for each of the one or more augmented reality elements that represents a correlation strength between the augmented reality element and the received characteristic data.

In an embodiment according to the invention, a method may comprise:
receiving data representative of a leave-behind augmented reality element, wherein the data comprises content of the leave-behind augmented reality element, and an anchor location associated with the leave-behind augmented reality element;
generating the leave-behind augmented reality element comprising the received data;
detecting when a networking system user associated with the user of the mobile computing device enters the anchor location; and
providing the leave-behind augmented reality element to the networking system user.

In an embodiment according to the invention, a method may comprise:
providing, from a mobile computing device and to a networking system, characteristic data, wherein the characteristic data comprises characteristic data associated with the mobile computing device, and characteristic data associated with a user of the mobile computing device;
receiving, from the networking system, one or more augmented reality elements that correspond to the provided characteristic data;
determining, based on an analysis of a plurality of display factors, a subset of the received one or more augmented reality elements; and
displaying, on a camera viewfinder display of the mobile computing device, the subset of the received one or more augmented reality elements.

The characteristic data associated with the mobile computing device may comprise location information associated with the mobile computing device.

Characteristic data associated with the user of the mobile computing device may comprise one or more of a networking system unique identifier associated with the user of the mobile computing device, application usage history associated with the user of the mobile computing device, or contact information associated with the user of the mobile computing device.

The one or more augmented reality elements that correspond to the provided characteristic data may comprise one or more of an augmented reality element that correlates with the location information associated with the mobile computing device, an augmented reality element that correlates with demographic information associated with the user of the mobile computing device, or an augmented reality element that correlates with networking system information associated with the user of the mobile computing device.

In an embodiment according to the invention, a method may comprise identifying the plurality of display factors, wherein the plurality of display factors comprise one or more of a resolution of the camera viewfinder display, a level of crowded-ness in an image frame taken from an image feed displayed within the camera viewfinder display, an analysis of networking system information associated with the user of the mobile computing device, or an analysis of metadata associated with each of the one or more received augmented reality elements.

In an embodiment according to the invention, a method may comprise mapping each of the subset of the received one or more augmented reality elements to a point within the camera viewfinder display.

In an embodiment according to the invention, a method may comprise:
detecting movement of the mobile computing device; and
updating the camera viewfinder display such that each of the subset of received one or more augmented reality elements remains anchored to the mapped point associated with that augmented reality element.

In an embodiment according to the invention, a method may comprise:
detecting an interaction with a particular augmented reality element in the displayed subset of the received one or more augmented reality elements; and
redirecting a display of the mobile computing device to a networking system application GUI comprising information associated with the particular augmented reality element.

In an embodiment according to the invention, a method may comprise:
organizing, based on metadata associated with each augmented reality element in the subset, the subset of augmented reality elements into one or more categories; and
wherein displaying the subset of the received one or more augmented reality elements comprises displaying only one of the one or more categories of augmented reality elements within the camera viewfinder display at a time.

In an embodiment according to the invention, a system may comprise:
at least one processor; and
at least one non-transitory computer-readable storage medium storing instructions thereon that, when executed by the at least one processor, cause the system to:
   maintain a plurality of augmented reality elements;
   receive, from a mobile computing device, a plurality of characteristic data, wherein the characteristic data comprises characteristic data associated with the mobile computing device, and characteristic data associated with a user of the mobile computing device;
   identify, from the maintained plurality of augmented reality elements, one or more augmented reality elements that correspond to the received characteristic data; and
   provide, to the mobile computing device and for display within a camera viewfinder display of the mobile computing device, the identified one or more augmented reality elements.

The instructions that, when executed by the at least one processor, cause the system to identify one or more augmented reality elements that correspond to the received characteristic data may comprise instructions that cause the system to:
analyze the received characteristic data to determine a location of the mobile computing device; and
identify one or more augmented reality elements that correspond to the location of the mobile computing device.

In an embodiment according to the invention, one or more computer-readable non-transitory storage media may embody software that is operable when executed to perform a method according to the invention or any of the above mentioned embodiments.

In an embodiment according to the invention, a system may comprise: one or more processors; and at least one memory coupled to the processors and comprising instructions executable by the processors, the processors operable when executing the instructions to perform a method according to the invention or any of the above mentioned embodiments.

In an embodiment according to the invention, a computer program product, preferably comprising a computer-readable non-transitory storage media, may be operable when executed on a data processing system to perform a method according to the invention or any of the above mentioned embodiments.

### BRIEF DESCRIPTION OF THE DRAWINGS

The disclosure describes one or more embodiments with additional specificity and detail through the use of the accompanying drawings, as briefly described below.
FIG. 1 illustrates a schematic diagram of an augmented reality system in accordance with one or more embodiments.
FIG. 2 illustrates a detailed schematic diagram of the augmented reality system in accordance with one or more embodiments.
FIGS. 3A-3C illustrate a series of graphical user interfaces illustrating various features of one embodiment of the augmented reality system.
FIGS. 4A-4D illustrate a series of graphical user interfaces illustrating various features of one embodiment of the augmented reality system.
FIG. 5 illustrates a graphical user interface illustrating various features of one embodiment of the augmented reality system.
FIGS. 6A-6D illustrate a series of graphical user interfaces illustrating various features of one embodiment of the augmented reality system.
FIGS. 7A-7B illustrate a series of graphical user interfaces illustrating various features of one embodiment of the augmented reality system.
FIG. 8 illustrates a flowchart of a series of acts in a method of composing a networking system post utilizing augmented reality elements in accordance with one or more embodiments.
FIG. 9 illustrates a flowchart of a series of acts in a method of providing augmented reality elements representing networking system content in accordance with one or more embodiments.
FIG. 10 illustrates a flowchart of a series of acts in a method of displaying augmented reality elements representing networking system content in accordance with one or more embodiments.
FIG. 11 illustrates a block diagram of an exemplary computing device in accordance with one or more embodiments.
FIG. 12 is an example network environment of a social networking system in accordance with one or more embodiments.
FIG. 13 illustrates a social graph in accordance with one or more embodiments.

### DETAILED DESCRIPTION

One or more embodiments described herein provide benefits and/or solve one or more of the foregoing or other problems in the art with systems and methods for utilizing augmented reality elements in connection with a camera viewfinder display of a mobile computing device to represent and/or create networking system content (e.g., social networking posts or messages). For example, by utilizing the augmented reality system, a networking system user can view and interact with augmented reality elements associated with the networking system directly through the camera viewfinder display of his or her mobile computing device. By utilizing these augmented reality elements within the camera viewfinder display, the user can generate a networking system post, interact with other networking system users, view networking system content, create additional augmented reality elements, and more.

As used herein, "augmented reality" refers to a system that creates a composite view for a user including computer-generated elements in association with the user's real-life view. For example, in one or more embodiments, the augmented reality system overlays computer-generated elements on a display of a user's real-life surroundings as captured by a camera of the user's computing device (e.g., mobile device). Also as used herein, an "augmented reality element" refers to the computer-generated elements utilized by the augmented reality system described herein. In one or more embodiments, an augmented reality element may be a digital photograph, a digital video, a computer-generated image (e.g., in two or three dimensions), a sound recording, a text scroller, a speech bubble, an interactive element (e.g., a text input box), an animation, a sticker, and so forth. In at least one embodiment, the augmented reality system "anchors" or maps an augmented reality element to a point within a camera viewfinder display associated with a location, person, or object such that if the location, person, or object moves within the display, the augmented reality element moves as well.

In one example, the augmented reality system described herein detects various characteristics associated with a networking system user and the networking system user's mobile computing device. In response to detecting these various characteristics, the augmented reality system identifies augmented reality elements and provides the identified augmented reality elements to the user's mobile computing device as a camera viewfinder display overlay. As used herein, a "camera viewfinder display" refers to a display presented by a user's mobile computing device that includes an image stream of image frames provided by the camera of the mobile computing device. For example, the camera viewfinder display illustrates in real-time what the mobile computing device camera is "looking at."

In one or more embodiments, the augmented reality system may detect characteristics of the networking system user including the user's gender, occupation, hobbies, networking system activity history, networking system profile information, etc. Further, the augmented reality system may detect characteristics of the user's mobile computing device including the location of the mobile computing device (e.g., based on GPS data, Wi-Fi data, etc.), an orientation of the mobile computing device (e.g., based on the mobile computing device's gyroscope or camera), etc. Additionally, if the camera of the mobile computing device is activated, the augmented reality system can also utilize computer vision techniques to analyze and determine characteristics of images captured by the camera (e.g., to detect objects, people, and so forth).

In response to detecting these user and mobile computing device characteristics, the augmented reality system can identify augmented reality elements that correspond to the detected characteristics. For example, in response to detecting that a networking system user is male, in his late twenties, a baseball enthusiast, and that his mobile computing device is located at a baseball stadium, the augmented reality system may identify augmented reality elements that prompt the user to compose a networking system post about the baseball game he is attending. The augmented reality system can then present the identified augmented reality elements within the camera viewfinder display of the user's mobile computing device. Thus, the user can interact with the provided augmented reality elements to compose and submit a networking system post regarding the baseball game.

In addition to providing augmented reality elements to a networking system user, the augmented reality system can also enable the networking system user to create augmented reality elements. For example, the augmented reality system can provide a series of selectable elements through the user's camera viewfinder display that assist the user in creating an augmented reality element that other networking system users can interact with and view. For instance, in an illustrative embodiment, the networking system user may wish to recommend a particular restaurant via the networking system. The augmented reality system can provide the user with interactive elements within the user's camera viewfinder display that enable the user to create an augmented reality element that embodies the user's recommendation for that restaurant. Later, when another networking system user (e.g., one of the user's networking system "friends") comes to the restaurant, the augmented reality system can provide the created augmented reality element to that networking system user.

In another example, the augmented reality system makes it possible for networking system users to easily find each other in a crowded location. For example, the augmented reality system can generate an augmented reality element that appears as a user avatar (e.g., a computer-generated representation of the user). In one or more embodiments, the augmented reality system can display the avatar in the camera viewfinder display of a networking system user such that the avatar appears where the associated user is located in a crowded space. Thus, when one of the user's networking system friends pans his or her camera viewfinder display across the crowded space, the friend can easily see the avatar and locate the associated user.

In addition to providing networking system content via augmented reality elements overlaid on a user's camera viewfinder display, the augmented reality system also provides partnered third-party content. For example, the augmented reality system can generate a camera viewfinder display overlay including augmented reality elements from a third party that applies to the user's location. To illustrate, in response to determining that the networking system user is at a baseball game, the augmented reality system can identify third-party content from a sports broadcaster. The augmented reality system can then generate augmented reality elements including the third-party content and create a camera viewfinder display including the generated elements such that the augmented reality elements enhance the user's view of the baseball game through the his camera viewfinder display.

In a further embodiment, the augmented reality system can automatically generate augmented reality elements in response to user actions. For example, in one or more embodiments, the augmented reality system can detect a gesture made by a networking system user captured through a camera of a mobile computing device. In response to the detected gesture, the augmented reality system can generate an augmented reality element and can then anchor the generated element to the user for a predetermined amount of time. Thus, anytime the user is displayed on a camera viewfinder display or in a photograph or video for the rest of the predetermined amount of time, the augmented reality system will add the generated augmented reality element to the display or captured media.

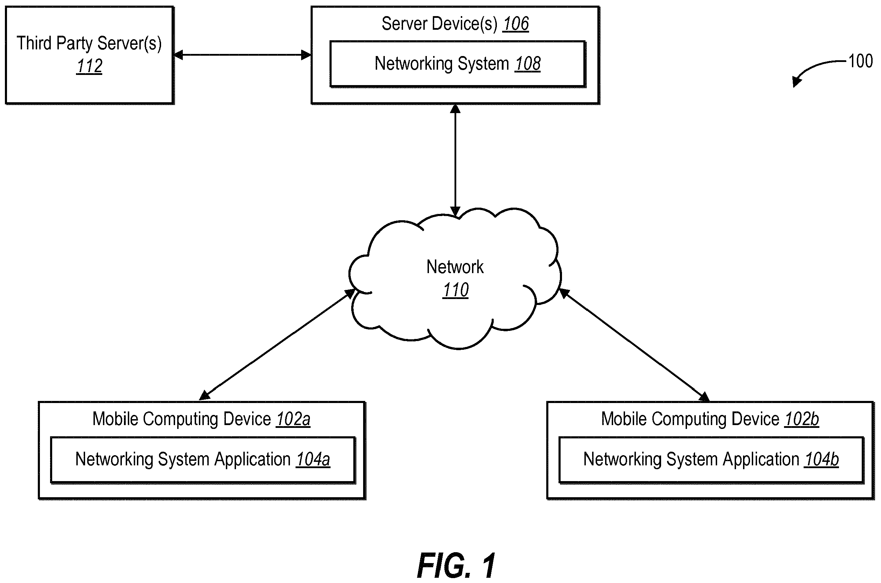

FIG. 1 illustrates an example block diagram of an environment for implementing the augmented reality system 100. As illustrated in FIG. 1, the augmented reality system 100 includes the mobile computing devices 102a, 102b, the server device(s) 106, and the third-party server 112, which are communicatively coupled through a network 110. As shown in FIG. 1, the mobile computing devices 102a, 102b include the networking system application 104a, 104b, respectively. Additionally shown in FIG. 1, the server device(s) 106 includes a networking system 108.

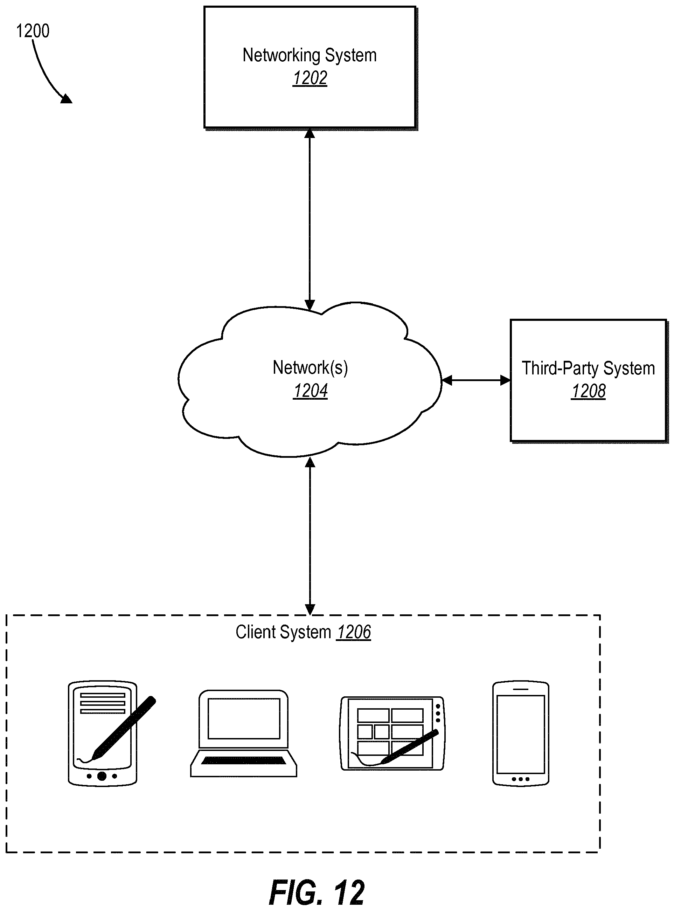

The mobile computing devices 102a, 102b, the server device(s) 106, and the third-party server 112 communicate via the network 110, which may include one or more networks and may use one or more communication platforms or technologies suitable for transmitting data and/or communication signals. In one or more embodiments, the network 110 includes the Internet or World Wide Web. The network 110, however, can include various other types of networks that use various communication technologies and protocols, such as a corporate intranet, a virtual private network ("VPN"), a local area network ("LAN"), a wireless local network ("WLAN"), a cellular network, a wide area network ("WAN"), a metropolitan area network ("MAN"), or a combination of two or more such networks. Although FIG. 1 illustrates a particular arrangement of the mobile computing devices 102a, 102b, the server device(s) 106, the third-party server 112, and the network 110, various additional arrangements are possible. For example, the mobile computing devices 102a, 102b may directed communicate with the networking system 108, bypassing the network 110. Additional details relating to the network 110 are explained below with reference to FIG. 12.

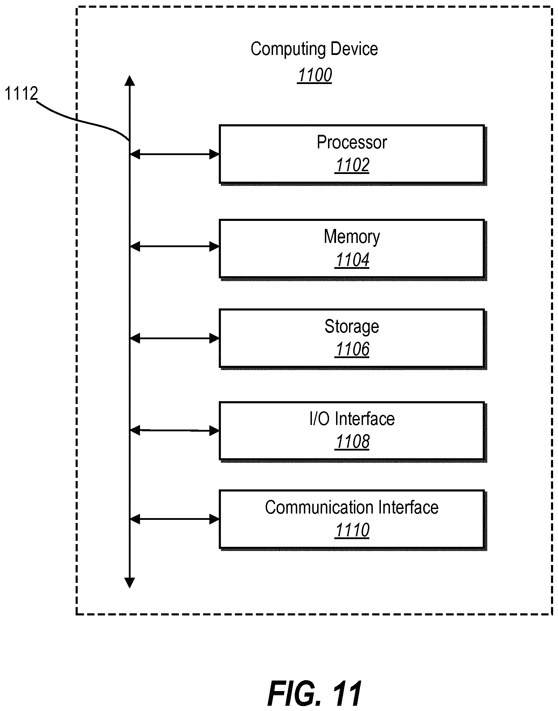

In one or more embodiments, the mobile computing devices 102a, 102b are one or more of various types of computing devices. For example, in one or more embodiments, the mobile computing devices 102a, 102b include a mobile device such as a mobile telephone, a smartphone, a PDA, a tablet, or a laptop. In alternative embodiments, the mobile computing devices 102a, 102b may include other computing devices such as a desktop computer, a server, or another type of computing device. Additional details with respect to the mobile computing device 102a, 102b are discussed below with respect to FIG. 11.

In at least one embodiment, the users of the mobile computing devices 102a, 102b are co-users via the networking system 108. For example, in at least one embodiment, the users of the mobile computing devices 102a, 102b are "friends" via the networking system 108 such that the networking system 108 adds posts submitted by the user of mobile computing device 102a to the newsfeed of the user of mobile computing device 102b, and vice versa. In one or more embodiments, the users of the mobile computing devices 102a, 102b interact with the networking system 108 via the networking system applications 104a, 104b installed on the mobile computing devices 102a, 102b respectively.

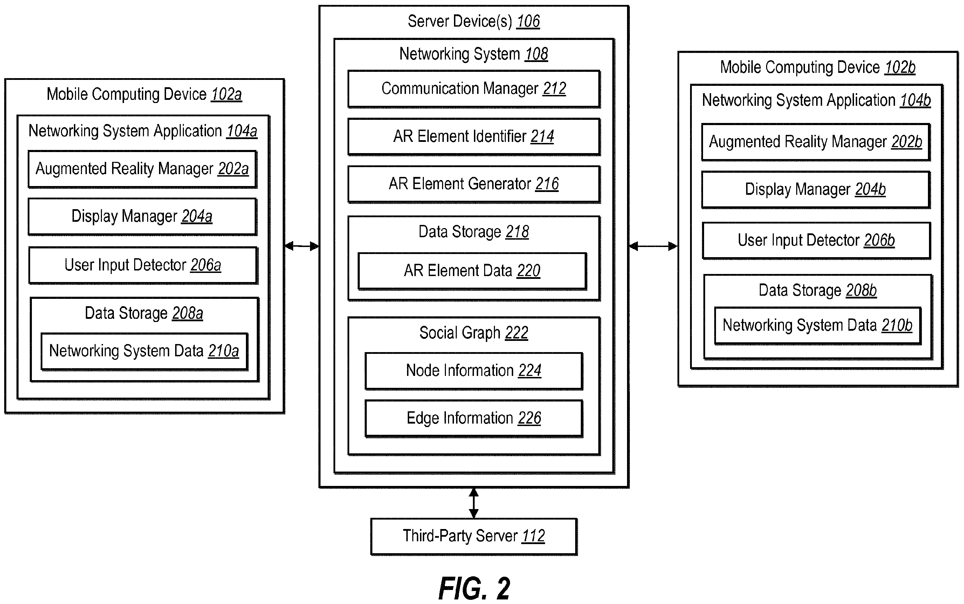

As discussed above, the systems and methods laid out with reference to FIG. 1 facilitate the use of augmented reality elements via the networking system 108. FIG. 2 illustrates a detailed schematic diagram illustrating an example embodiment of the augmented reality system 100. As shown in FIG. 2, the augmented reality system 100 includes, but is not limited to, the mobile computing devices 102a, 102b, the server device(s) 106, and the third-party server 112. In one or more embodiments, the mobile computing devices 102a, 102b include networking system applications 104a, 104b, respectively. As shown in FIG. 2, the networking system application 104a, 104b includes an augmented reality manager 202a, 202b, a display manager 204a, 204b, a user input detector 206a, 206b, and a data storage 208a, 208a including networking system data 210a, 210b.

Additionally, the server device(s) 106 hosts the networking system 108. In one or more embodiments, the networking system 108 includes a communication manager 212, an augmented reality element identifier 214, an augmented reality element generator 216, and a data storage 218 including augmented reality element data 220.

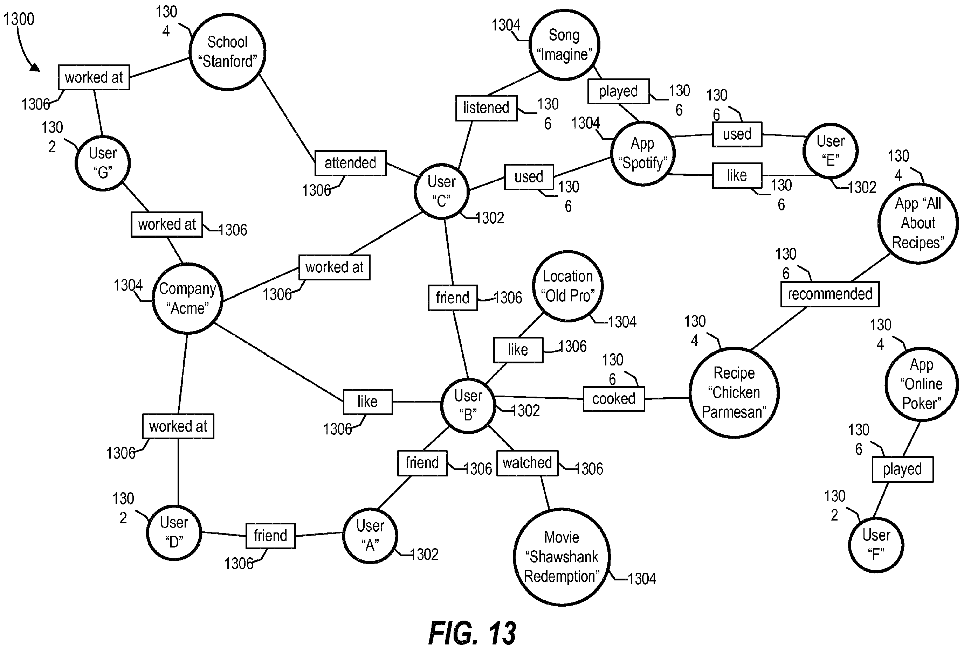

In at least one embodiment, the augmented reality system 100 accesses the networking system 108 in order to identify and analyze networking system user data. Accordingly, the networking system 108 includes a social graph 222 for representing a plurality of users, actions, and concepts. In one or more embodiments, the social graph 222 includes node information 224 and edge information 226. Node information 224 of the social graph 222 stores information including, for example, nodes for users and nodes for repositories. Edge information 226 of the social graph 222 stores information including relationships between nodes and/or actions occurring within the networking system 108. Further details regarding the networking system 108, the social graph 222, edges, and nodes are presented below with respect to FIGS. 12 and 13.

Each of the components 212-226 of the networking system 108, and the components 202a, 202b through 210a, 210b of the networking system applications 104a, 104b can be implemented using a computing device including at least one processor executing instructions that cause the augmented reality system 100 to perform the processes described herein. In some embodiments, the networking system components described herein can be implemented by the server device 106, or across multiple server devices. Additionally or alternatively a combination of one or more server devices and one or more mobile computing devices can implement the components of the networking system 108 and/or the networking system applications 104a, 104b. Additionally or alternatively, the components described herein can comprise a combination of computer-executable instructions and hardware.

In one or more embodiments, the networking system application 104a, 104b is a native application installed on the mobile computing device 102a, 102b. For example, the networking system application 104a, 104b can be a mobile application that installs and runs on a mobile device, such as a smart phone or a tablet computer. Alternatively, the networking system application 104a, 104b can be a desktop application, widget, or other form of a native computer program. Furthermore, the networking system application 104a, 104b may be a remote application accessed by the mobile computing device 102a, 102b, respectively. For example, the networking system application 104a, 104b may be a web application that is executed within a web browser of the mobile computing device 102a, 102b, respectively.

As mentioned above, and as shown in FIG. 2, the networking system application 104a, 104b includes an augmented reality manager 202a, 202b. In one or more embodiments, the augmented reality manager 202a, 202b interacts with the networking system 108 in order to provide augmented reality elements via a camera viewfinder display of the mobile computing device 102a, 102b. For example, in at least one embodiment and as will be described in greater detail below, the networking system 108 maintains and/or generates a repository of augmented reality elements. Accordingly, in response to receiving data related to characteristics of the mobile computing device 102a, 102b from the augmented reality manager 202a, 202b the networking system 108 provides a set of augmented reality elements to the augmented reality manager 202a, 202b. For a variety of reasons, the augmented reality manager 202a, 202b may not be able to display every augmented reality element provided by the networking system 108 (e.g., due to display restrictions, etc.). Thus, in at least one embodiment, the augmented reality manager 202a, 202b then performs an analysis to determine a subset of the provided set of augmented reality elements to present to the user via the camera viewfinder display of the mobile computing device 102a 102b.

Accordingly, in one or more embodiments, the augmented reality manager 202a, 202b collects characteristic data associated with the mobile computing device 102a, 102b respectively. For example, the augmented reality manager 202a, 202b, collects information detailing the location of the mobile computing device 102a, 102b. In at least one embodiment, the augmented reality manager 202a, 202b collects location information including GPS information and/or WiFi information.

Additionally, the augmented reality manager 202a, 202b collects characteristic data that is related to the user of the mobile computing device 102a, 102b. For example, in at least one embodiment, the user of the mobile computing device 102a, 102b is logged onto the networking system 108 via the networking system application 104a, 104b in order to utilize any of the features of the augmented reality system 100. Accordingly, in at least one embodiment, the augmented reality manager 202a, 202b identifies the user's unique networking system user identifier. Additionally, the augmented reality manager 202a, 202b can collect additional user information including, but not limited to, application usage history, mobile computing device usage logs, contact information, and so forth. In at least one embodiment, the augmented reality manager 202a, 202b only collects user information in response to the user specifically opting into those features of the augmented reality system 100 so as to protect the user's privacy.

Furthermore, the augmented reality manager 202a, 202b collects characteristic data associated with a camera of the mobile computing device 102a, 102b. For example, in one or more embodiments, the augmented reality manager 202a, 202b collects information regarding the orientation of the camera (e.g., portrait or landscape based on a gyroscope of the mobile computing device 102a, 102b). Additionally, the augmented reality manager 202a, 202b can regularly (e.g., at predetermined intervals) collect an image frame from the camera viewfinder image feed.

After collecting the characteristic information described above, the augmented reality manager 202a, 202b provides the collected characteristic information to the networking system 108. As will be described in greater detail below, the networking system 108 utilizes the provided characteristic information to identify a set of augmented reality elements to send back to the mobile computing device 102a, 102b. Accordingly, in one or more embodiments, the augmented reality manager 202a, 202b receives the set of augmented reality elements from the networking system 108. In at least one embodiment, and as will be described in greater detail below, the networking system 108 provides metadata along with each augmented reality element that includes, but is not limited to, demographic information for users who frequently interact with each augmented reality element, geographic information for where each augmented reality element is most commonly used, for each augmented reality element, networking system information for any networking system users who are "friends" of the user of the mobile computing device 102a, 102b, and mapping rules for each augmented reality element (i.e., rules dictating where an augmented reality should be displayed within a camera viewfinder display).

Due to various constraints of the mobile computing device 102a, 102b (e.g., the size and resolution of the camera viewfinder display, whether the camera viewfinder display is overly crowded, etc.), the augmented reality manager 202a, 202b may not be able to present all of the augmented reality elements provided by the networking system 108. Accordingly, in at least one embodiment, the augmented reality manager 202a, 202b determines a subset of the provided augmented reality elements to present via the camera viewfinder display of the mobile computing device 102a, 102b. In one or more embodiments, the augmented reality manager 202a, 202b determines the subset of the provided augmented reality elements based on an analysis of a variety of display factors.

For example, in one or more embodiments, the augmented reality manager 202a, 202b determines a subset of augmented reality elements based on an analysis of the size of each augmented reality element in the subset relative to the camera viewfinder display. For example, the augmented reality manager 202a, 202b may not select an augmented reality element that is too large or too small compared to the size of the camera viewfinder display. In at least one embodiment, the augmented reality manager 202a, 202b utilizes a heuristic that mandates that a single augmented reality element must be viewable but cannot take up more than a predetermined amount of viewable space in the camera viewfinder display.

Additionally, the augmented reality manager 202a, 202b determines the subset of augmented reality elements based on an analysis of one or more image frames taken from the image feed presented on the camera viewfinder display of the mobile computing device 102a, 102b. For example, in at least one embodiment, the augmented reality manager 202a, 202b analyzes the image frame to determine whether the image frame is "crowded" or "un-crowded." For instance, an image frame may be crowded if it includes several people grouped together for a "group selfie" (i.e., the people are huddled close together leaving little space in the image frame that is not occupied by a face). Conversely, an image frame may be un-crowded if it includes a landscape picture of a grassy hill against a blue sky. In one or more embodiments, the augmented reality manager 202a, 202b utilizes a heuristic that mandates the number and/or size of augmented reality elements included in a camera viewfinder display is inversely proportional to the level of crowded-ness in an image frame taken from the image feed displayed on the camera viewfinder display (e.g., the less crowded an image frame, the more augmented reality elements can be included).

Furthermore, the augmented reality manager 202a, 202b determines the subset of augmented reality elements based on an analysis of networking system information associated with the user of the mobile computing device 102a, 102b. For example, as mentioned above, the networking system 108 provides metadata with each augmented reality element in the set of provided augmented reality elements. Accordingly, the augmented reality manager 202a, 202b can determine augmented reality elements in the set that are used by other networking system users who are demographically similar to the user of the mobile computing device 102a, 102b. Further, the augmented reality manager 202a, 202b can determine augmented reality elements from the set that are being used at or near the location of the mobile computing device 102a, 102b.

The augmented reality manager 202a, 202b can also determine augmented reality elements that are being or have been used by social networking friends of the user of the mobile computing device 102a, 102b. For example, the augmented reality manager 202a, 202b can identify augmented reality elements used by the user's social networking friends with whom the user has a high relationship coefficient. In other words, in one or more embodiments, the augmented reality manager 202a, 202b operates under a heuristic that the user of the mobile computing device 102a, 102b is more likely to interact with augmented reality elements that have been used by social networking friends with whom the user is relatively close (e.g., the user is likely closer to a spouse than to an old high school friend).

Additionally, when determining augmented reality elements to provide to the user, the augmented reality manager 202a, 202b can also take into account the user's past augmented reality element interactions. For example, if the user has previously interacted several times with a particular type of augmented reality element, the augmented reality manager 202a, 202b will likely provide that type of augmented reality element again instead of a different type of augmented reality element. Thus, in one or more embodiments, the augmented reality manager 202a, 202b operates under an overarching heuristic that the user of the mobile computing device 102a, 102b will likely want to be provided with augmented reality elements with which he is likely to interact.

In at least one embodiment, the augmented reality manager 202a, 202b determines which augmented reality elements to provide to the user by calculating a score for each augmented reality element provided by the networking system 108. For example, the augmented reality manager 202a, 202b may calculate the score by assigning a weighted value to each of the variety of display factors described above. Thus, certain display factors may carry a heavier weight than others. For instance, the size of a particular augmented reality element relative to the camera viewfinder display may carry a heavier weight than whether the user of the mobile computing device 102a, 102b has used the particular augmented reality element previously. Accordingly, in one or more embodiments, the augmented reality manager 202a, 202b determines the subset of augmented reality elements to provide via the camera viewfinder display by identifying a threshold amount of top scoring augmented reality elements.

In addition to determining a subset of augmented reality elements to provide via the camera viewfinder display of the mobile computing device 102a, 102b, the augmented reality manager 202a, 202b also maps each of the subset of augmented reality elements to a point or area within the camera viewfinder display. For example, in one or more embodiments, mapping rules may require that certain augmented reality elements are associated with a displayed person (e.g., a "tag this person" type of augmented reality element), an object (e.g., a "rate this dish" type of augmented reality element), or requires a certain type of background over which it must be overlaid (e.g., a "virtual scoreboard" requires a certain amount of solid-colored background over which it can be overlaid). As mentioned above, the networking system 108 may provide mapping rules for each augmented reality element as part of the metadata for each augmented reality element.

Accordingly, in order to map an augmented reality element to the correct point or area within the camera viewfinder display, the augmented reality manager 202a, 202b can analyze an image frame taken from the camera viewfinder display to find the optimal location for the augmented reality element. For example, if the mapping rules for an augmented reality element specify that the augmented reality element should be mapped to a blank (e.g., solid colored) space of a particular size, the augmented reality manager 202a, 202b can analyze the image frame to identify an area that corresponds to that requirement. The augmented reality manager 202a, 202b can then map that identified area within the image frame to the corresponding augmented reality element. Once the correct mapping for an augmented reality element is established, the augmented reality manager 202a, 202b anchors the augmented reality element to that location within the camera viewfinder display.

As mentioned above, and as shown in FIG. 2, the networking system application 104a, 104b includes a display manager 204a, 204b. The display manager 204a, 204b provides, manages, and/or controls a graphical user interface that allows the user of the mobile computing device 102a, 102b to interact with features of the augmented reality system 100. For example, in response to the augmented reality manager 202a, 202b anchoring an augmented reality element to a location within the camera viewfinder display of the mobile computing device 102a, 102b, the display manager 204a, 204b maintains the location of the augmented reality element relative to other objects displayed within the camera viewfinder display.

To illustrate, a feature of some embodiments of the augmented reality system 100 is that a displayed augmented reality element remains in a single location relative to a displayed object in the camera viewfinder display, even when the user of the mobile computing device 102a, 102b moves the camera. Thus, when the user pans the camera of the mobile computing device 102a, 102b across a scene, the augmented reality element appears anchored to a stationary object within the camera viewfinder display. In one or more embodiments, the display manager 204a, 204b utilizes simultaneous location and mapping ("SLAM") techniques to construct and/or update a virtual map of the environment displayed in a camera viewfinder display while tracking the location of the mobile computing device 102a, 102b within that environment. In at least one embodiment, SLAM enables the display manager 204a, 204b to determine distance between objects, degrees of rotation, rate of movement, and so forth. Accordingly, in one example, the display manager 204a, 204b updates the camera viewfinder display of the mobile computing device 102a, 102b such that as the user points the camera at an object in real life, an augmented reality element anchored to that object remains in place relative to the object, even when the user pans the camera of the mobile computing device 102a, 102b.

In addition to enabling the display of one or more augmented reality elements within a camera viewfinder display, the display manager 204a, 204b also facilitates the display of graphical user interfaces that enable the user of the mobile computing device 102a, 102b to interact with the networking system 108. For example, the display manager 204a, 204b may compose a graphical user interface of a plurality of graphical components, objects, and/or elements that allow a user to engage in networking system activities. More particularly, the display manager 204a, 204b may direct the mobile computing device 102a, 102b to display a group of graphical components, objects, and/or elements that enable a user to interact with various features of the networking system 108.

In addition, the display manager 204a, 204b directs the mobile computing device 102a, 102b to display one or more graphical objects, controls, or elements that facilitate user input for interacting with various features of the networking system 108. To illustrate, the display manager 204a, 204b provides a graphical user interface that allows the user of the mobile computing device 102a, 102b to input one or more types of content into a networking system post or electronic message.

The display manager 204a, 204b also facilitates the input of text or other data for the purpose of interacting with one or more features of the networking system 108. For example, the display manager 204a, 204b provides a user interface that includes a touch display keyboard. A user can interact with the touch display keyboard using one or more touch gestures to input text to be included in a social networking system post or electronic message. For example, a user can use the touch display keyboard to compose a message. In addition to text, the graphical user interface including the touch display keyboard can facilitate the input of various other characters, symbols, icons, or other information. In at least one embodiment, the display manager 204a, 204b provides the touch display keyboard in connection with a camera viewfinder display of the mobile computing device 102a, 102b.

Furthermore, the display manager 204a, 204b is capable of transitioning between two or more graphical user interfaces. For example, in one embodiment, the user of the mobile computing device 102a, 102b may interact with one or more augmented reality elements within the camera viewfinder display. Then in response to a touch gesture from the user (e.g., a swipe left touch gesture), the display manager 204a, 204b can transition to a graphical user interface including the user's newsfeed.

As further illustrated in FIG. 2, the networking system application 104a, 104b includes a user input detector 206a, 206b. In one or more embodiments, the user input detector 206a, 206b detects, receives, and/or facilitates user input in any suitable manner. In some examples, the user input detector 206a, 206b detects one or more user interactions with respect to the camera viewfinder display (e.g., a user interaction with an augmented reality element within the camera viewfinder display). As referred to herein, a "user interaction" means a single interaction, or combination of interactions, received from a user by way of one or more input devices.

For example, the user input detector 206a, 206b detects a user interaction from a keyboard, mouse, touch page, touch screen, and/or any other input device. In the event the mobile computing device 102a, 102b includes a touch screen, the user input detector 206a, 206b detects one or more touch gestures (e.g., swipe gestures, tap gestures, pinch gestures, reverse pinch gestures) from a user that form a user interaction. In some examples, a user can provide the touch gestures in relation to and/or directed at one or more graphical objects or graphical elements (e.g., augmented reality elements) of a user interface.

The user input detector 206a, 206b may additionally, or alternatively, receive data representative of a user interaction. For example, the user input detector 206a, 206b may receive one or more user configurable parameters from a user, one or more commands from the user, and/or any other suitable user input. The user input detector 206a, 206b may receive input data from one or more components of the networking system 108, or from one or more remote locations.

The networking system application 104a, 104b performs one or more functions in response to the user input detector 206a, 206b detecting user input and/or receiving other data. Generally, a user can control, navigate within, and otherwise use the networking system application 104a, 104b by providing one or more user inputs that the user input detector 206a, 206b can detect. For example, in response to the user input detector 206a, 206b detecting user input, one or more components of the networking system application 104a, 104b allow the user of the mobile computing device 102a, 102b to select an augmented reality element, scroll through a newsfeed, input text into a networking system post composer, and so forth.

As shown in FIG. 2, and as mentioned above, the networking system application 104a, 104b also includes the data storage 208a, 208b. The data storage 208a, 208b includes networking system data 210a, 210b. In one or more embodiments, the networking system data 210a, 210b is representative of networking system information (e.g., augmented reality element information, networking system activity information, etc.), such as described herein.

Also as shown in FIG. 2, and as mentioned above, the server device(s) 106 hosts the networking system 108. The networking system 108 provides augmented reality elements, networking system posts, electronic messages, and so forth to one or more users of the networking system 108 (e.g., by way of a camera viewfinder display, a newsfeed, a communication thread, a messaging inbox, a timeline, a "wall," or any other type of graphical user interface). For example, one or more embodiments provide a user with a networking system newsfeed containing posts from one or more co-users associated with the user.

In one or more embodiments, a networking system user scrolls through the networking system newsfeed in order to view recent networking system posts submitted by the one or more co-users associated with the user via the networking system application 104a, 104b. In one embodiment, the networking system 108 organizes the networking system posts chronologically in a user's networking system newsfeed. In alternative embodiments, the networking system 108 organizes the networking system posts geographically, by interest groups, according to a relationship coefficient between the user and the co-user, etc.

The networking system 108 also enables the user to engage in all other types of networking system activity. For example, the networking system 108 enables a networking system user to scroll through newsfeeds, click on posts and hyperlinks, compose and submit electronic messages and posts, and so forth. As used herein, a "structured object" is a displayed communication (e.g., an offer, a post, etc.) that includes structured data. In at least one embodiment, the networking system 108 treats augmented reality elements as structured objects.

Also as illustrated in FIG. 2, the networking system 108 includes a communication manager 212. In one or more embodiments, the communication manager 212 sends and receives communications to and from the networking system applications 104a, 104b, and the third-party server 112. For example, the communication manager 212 receives characteristic information from the networking system application 104a, 104b, and provides this characteristic information to the augmented reality element identifier 214 and/or the augmented reality element generator 216. In response to receiving a set of augmented reality elements, the communication manager 212 sends this set back to the networking system application 104a, 104b.

In addition to augmented reality element data, the communication manager 212 sends and receives information related to networking system activities. For example, the communication manager 212 receives information associated with networking system activities engaged in by one or more networking system users. To illustrate, the communication manager 212 receives information from the networking system application 104a, 104b detailing the clicks, scrolls, keyboard inputs, hovers, and so forth engaged in by the user of the mobile computing device 102a, 102b in association with features of the networking system 108 and/or the augmented reality system 100. In at least one embodiment, the networking system 108 utilizes this information to determine various characteristics of the user of the mobile computing device 102a, 102b.

Furthermore, the communication manager 212 also receives information associated with the user's interactions with one or more augmented reality elements. For example, some augmented reality elements are interactive and allow the user to perform various networking system activities directly through a camera viewfinder display. Accordingly, when a user interacts with an augmented reality element, the networking system application 104a, 104b provides information related to the interaction to the communication manager 212.

Moreover, in some embodiments, the networking system 108 partners with one or more third parties in order to provide additional third-party augmented reality elements and functionality to networking system users. Accordingly, the communication manager 212 sends and receives information to and from the third-party server 112 in order to facilitate those interactions. For example, the augmented reality system 100 may determine that a user is at a baseball stadium where a hot dog vendor has partnered with the networking system 108 in order for the augmented reality system 100 to provide an augmented reality element that allows the user to have a custom hot dog delivered right to his seat. Thus, when the user interacts with the augmented reality element, the communication manager 212 receives information about the interaction, and relays that information on to the third-party server 112. Then, when the third-party server 112 responds with an order acknowledgement and a delivery status update, the communication manager 212 can send that information back to the networking system application 104a, 104b. In at least one embodiment, the communication manager 212 can also relay payment information to the third-party server 112 such that the user can pay for his hot dog through the augmented reality system 100.

As mentioned above, and as illustrated in FIG. 2, the networking system 108 includes an augmented reality element identifier 214. As mentioned above, the networking system application 104a, 104b collects characteristic information related to the mobile computing device 102a, 102b and the user of the mobile computing device 102a, 102b, and sends this characteristic information to the networking system 108. In response to receiving this characteristic information, the augmented reality element identifier 214 identifies a set of augmented reality elements and/or corresponding content based on the provided characteristic information.

In order to identify a set of augmented reality elements that correspond with provided characteristic information, the augmented reality element identifier 214 begins by analyzing the provided characteristic information. In one or more embodiments, the augmented reality element identifier 214 begins by analyzing the provided characteristic information to determine the location of the mobile computing device 102a, 102b. For example, the augmented reality element identifier 214 can analyze provided GPS information, WiFi information, networking system information, and Internet searches in order to determine where the mobile computing device 102a, 102b is located and what is currently occurring at the location of the mobile computing device 102a, 102b. For example, from provided GPS coordinates of the mobile computing device 102a, 102b, the augmented reality element identifier 214 can determine that the user of the mobile computing device 102a, 102b is currently attending a rock concert in Central Park. In another example, from the provided GPS coordinates of the mobile computing device 102a, 102b, the augmented reality element identifier 214 can determine that the user of the mobile computing device 102a, 102b is camping in the Smokey Mountains in the rain.

Additionally, the augmented reality element identifier 214 analyzes the provided characteristic information to determine user information. For example, the augmented reality element identifier 214 can determine the user's demographic information, the user's profile information, the user's networking system activity history, the networking system activity history of the user's networking system friends, the demographic information of the user's networking system friends, and so forth. In at least one embodiment, in order to protect the user's privacy, the augmented reality element identifier 214 requires that the user specifically opts in to this level of analysis.

Furthermore, augmented reality element identifier 214 can also analyze an image frame taken from the camera viewfinder display of the mobile computing device 102a, 102b in order to determine additional characteristics of the mobile computing device 102a, 102b. For example, the augmented reality element identifier 214 can utilize computer vision techniques to identify objects, backgrounds, text, and people within the image frame. Further, in response to identifying a person in the image frame, the augmented reality element identifier 214 can utilize facial recognition technology in combination with networking system information to identify networking system users within the image frame.

After analyzing the provided characteristic information to determine the exact location, conditions, and circumstances under which the mobile computing device 102a, 102b is currently situated, the augmented reality element identifier 214 can identify a set of augmented reality elements that correspond with the mobile computing device 102a, 102b. In at least one embodiment, the augmented reality element identifier 214 begins by identifying augmented reality elements that correspond with the location of the mobile computing device 102a, 102b. In some embodiments, this is the minimum level of analysis required by the augmented reality element identifier 214. Accordingly, the augmented reality element identifier 214 may simply provide the set of augmented reality elements that correspond to the location of the mobile computing device 102a, 102b.

In additional embodiments, the augmented reality element identifier 214 may broaden or narrow the set of augmented reality elements that correspond to the location of the mobile computing device 102a, 102b based on the additional characteristic information. For example, the augmented reality element identifier 214 can add or remove an augmented reality element from the collected set based on whether the augmented reality element corresponds with the user's demographic information, whether the user has previously used that augmented reality element, whether the user's friends have used that augmented reality element, and so forth. Additionally, the augmented reality element identifier 214 can add or remove an augmented reality element from the collected set based on the analysis of the image frame. For example, the augmented reality element identifier 214 can add or remove an augmented reality element based on whether the augmented reality element corresponds with the objects or person in the image frame, whether the augmented reality element corresponds with the lighting conditions displayed in the image frame, whether the augmented reality element corresponds with the circumstances depicted in the image frame, and so forth. In one or more embodiments, the augmented reality element identifier 214 utilizes machine learning in making the determinations described above in order to collect the resulting set of augmented reality elements.

In one or more embodiments, the augmented reality element identifier 214 may utilize a scoring scheme in order to identify augmented reality elements to include in the set. For example, the augmented reality element identifier 214 may utilize machine learning to calculate a score that reflects how strongly an augmented reality element corresponds with the characteristic information. In that case, the augmented reality element identifier 214 may include augmented reality elements that score above a threshold calculation. Additionally or alternatively, the augmented reality element identifier 214 may only include a threshold number of augmented reality elements to provide in the set, in order to keep from overwhelming the mobile computing device 102a, 102b.

In one or more embodiments, the augmented reality system 100 enables the generation of augmented reality elements. For example, the augmented reality system 100 can enable a user to generate a "leave-behind" augmented reality element that the augmented reality system 100 anchors to a particular location. Thus, when other networking system users later access the augmented reality at that particular location, they can discover the leave-behind augmented reality element. In another example, the augmented reality system 100 can generate customized augmented reality elements for a variety of purposes.

Accordingly, as shown in FIG. 2, the networking system 108 includes the augmented reality element generator 216. In one or more embodiments, the augmented reality element generator 216 receives information, either from the networking system application 104a, 104b or from the networking system 108, and generates an augmented reality element embodying the received information. To illustrate, the augmented reality element generator 216 may receive information from the networking system application 104a, 104b including a digital video of the user describing how much fun he is having at the theme park where he is currently located. In at least one embodiment, the augmented reality element generator 216 can generate an augmented reality element including the user's digital video, and anchor the generated augmented reality element to the location of the theme park. Then when other networking system users later visit the theme park, the augmented reality element identifier 214 may identify and provide the generated augmented reality element to those networking system users.

In one or more embodiments, the augmented reality element generator 216 can associate various rules with a leave-behind augmented reality element. For example a user creating a leave-behind augmented reality element can specify that the augmented reality element may only be viewed by his or her networking system friends, by a group of his or her networking system friends, or by a single networking system friend. Alternatively, the creator of a leave-behind augmented reality element can specify that any user of the augmented reality system may view the augmented reality element. In at least one embodiment, the creator can also specify additional rules such as an expiration date and time for the leave-behind augmented reality element after which the element may no longer be viewed, a time of day during which the element may be viewed, a background requirement against which the element must be displayed, etc. Accordingly, the augmented reality element generator 216 can associate one or more of these rules with the generated augmented reality element as metadata.

In another example, the augmented reality element generator 216 may receive information from the networking system 108 including the networking system user identifiers for networking system users identified in an image frame provided (e.g., within a camera viewfinder) by networking system application 104a, 104b. In at least one embodiment, the augmented reality element generator 216 can generate customized augmented reality elements specific to each of the identified networking system users. For example, the customized augmented reality element can include the networking system user's name, the networking system user's profile picture, the networking system user's avatar, and so forth.

As shown in FIG. 2, and as mentioned above, the networking system 108 also includes the data storage 218. The data storage 218 includes augmented reality element data 220. In one or more embodiments, the augmented reality element data 220 is representative of augmented reality element information (e.g., the display characteristics of the augmented reality elements, the metadata associated with each augmented reality element, etc.), such as described herein.

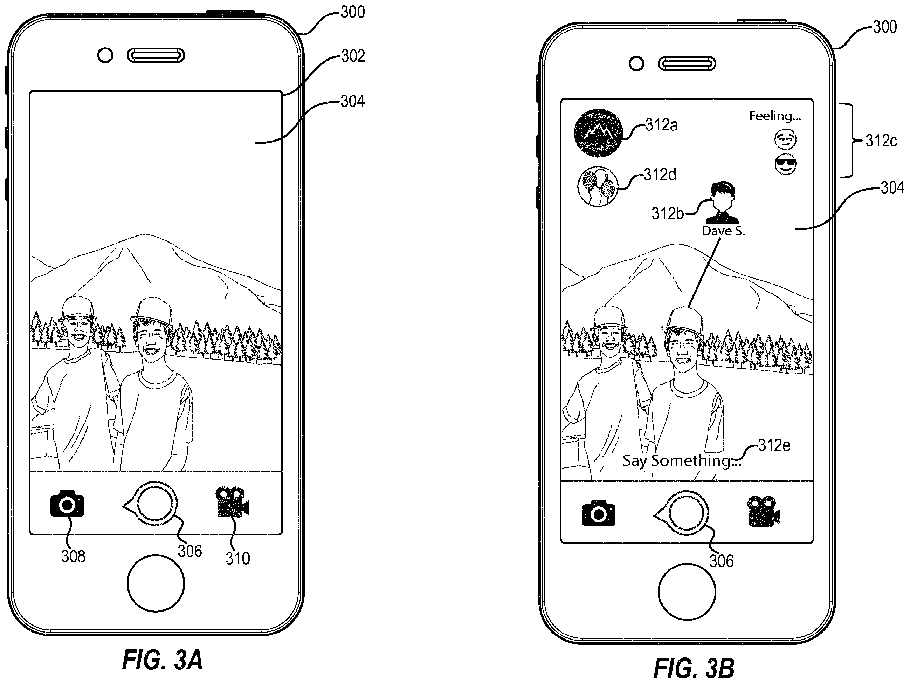

As will be described in more detail below, the components of the augmented reality system 100 can provide one or more graphical user interfaces ("GUIs") and/or GUI elements. In particular, as described above, the augmented reality system 100 provides one or more augmented reality elements as an overlay within the camera viewfinder display of the mobile computing device 102a, 102b. FIGS. 3A-7B and the description that follows illustrate various example embodiments of the features of the augmented reality system 100 that are in accordance with general principles as described above.

As described above, the augmented reality system 100 provides augmented reality element within a camera viewfinder display of a mobile computing device. Accordingly, FIG. 3A illustrates a mobile computing device 300 where the camera viewfinder display 304 is active on the touch screen 302 of the mobile computing device 300. Additionally, as shown in FIG. 3A, the camera viewfinder display 304 includes a shutter button 306 (i.e., to capture a digital photograph or video), a digital photograph control 308, and a digital video control 310 (i.e., to select the type of multimedia to capture). Although the embodiments described herein include a smartphone mobile computing device, in additional embodiments, the mobile computing device 300 may be a tablet computer, a laptop computer, an augmented reality or virtual reality headset, or any other type of computing device suitable for interacting with the features of the augmented reality system 100.

In one or more embodiments, upon detecting the activation of the camera viewfinder display 304, the augmented reality system 100 collects characteristic data and identifies augmented reality elements through the methods and processes described herein. In response to receiving the identified augmented reality elements, the augmented reality system 100 provides the augmented reality elements via the camera viewfinder display 304. For example, as illustrated in FIG. 3B, in response to collecting and determining the characteristic information associated with the mobile computing device, the augmented reality system 100 provides the augmented reality elements 312a-312e.

In the embodiment illustrated in FIGS. 3A-3C, the user of the mobile computing device 300 is spending the day with two friends at Lake Tahoe. Accordingly, the augmented reality system 100 collects and analyzes characteristic information including the GPS location of the mobile computing device 300, an image frame taken from the camera viewfinder display 304, the networking system unique identifier associated with the user of the mobile computing device 300, and the other characteristic information described above. From this analysis, in one or more embodiments, the augmented reality system 100 identifies the augmented reality elements 312a-312e that correspond with the characteristic information.

For example, as shown in FIG. 3B, the augmented reality system 100 provides the augmented reality element 312a in response to determining that the mobile computing device 300 is located at a GPS location corresponding to a business (e.g., "Tahoe Adventures"). Accordingly, the augmented reality system 100 identifies a logo associated with the business (e.g., from a web search for the business, from a networking system page associated with the business, etc.), and generates the augmented reality element 312a including the identified logo. In one or more embodiments, in response to detecting a selection of the augmented reality element 312a, the augmented reality system 100 can open a browser window on the touch screen 302 of the mobile computing device 300 and direct the browser to a website associated with "Tahoe Adventures." Additionally, in one or more embodiments, the augmented reality system 100 may add animation to the augmented reality element 312a (e.g., spinning, color changes, etc.). In yet further embodiments, user interaction with the augmented reality element 312a triggers creation of a "check-in" at the business or another post associated with the business. Accordingly, the user can create a networking system post by interacting with one or more of the augmented reality elements.

Furthermore, as shown in FIG. 3B, the augmented reality system 100 performs facial recognition in connection with an image frame taken from the camera viewfinder display 304 in order to identify a networking system user portrayed therein (i.e., "Dave S."). Accordingly, in response to accessing the networking system account associated with the identified networking system user, the augmented reality system 100 can generate and/or provide the augmented reality element 312b representing the identified user. As shown in FIG. 3B, the augmented reality element 312b can include a screen name (e.g., "Dave S."), and an avatar or profile picture associated with the identified networking system user. In one or more embodiments, the augmented reality system 100 identifies the components of the augmented reality element 312b from a networking system profile associated with the identified networking system user. In alternative embodiments, the augmented reality system 100 can identify the components of the augmented reality element 312b from Internet searches, or other data sources.

In one or more embodiments, in response to detecting a selection of the augmented reality element 312b, the augmented reality system 100 can redirect the touch screen 302 to display a graphical user interface provided by the networking system application installed on the mobile computing device 300. The networking system application can then provide a display of the networking system homepage associated with the networking system user associated with the augmented reality element 312b. Alternatively, in response to detecting a selection of the augmented reality element 312b, the augmented reality system 100 can redirect the touch screen 302 to display a message composer graphical user interface where in the user of the mobile computing device 300 can compose an networking system message to the networking system user associated with the augmented reality element 312a. In yet further embodiments, in response to a selection of the augmented reality element 312b, the augmented reality system can tag the identified user in a post being created by the user of the mobile computing device 300. As such, the user can interact with the augmented reality element 312b and one or more other augmented reality elements to create a post in which the identified user is tagged.

Additionally, as shown in FIG. 3B, the augmented reality system 100 analyzes networking system activity information (e.g., to determine that the user of the mobile computing device 300 frequently visits Lake Tahoe and enjoys time there, etc.) to identify an overall mood associated with the image frame taken from the camera viewfinder display 304. In response to identifying the likely overall mood, the augmented reality system 100 generates and provides the augmented reality element 312c. As shown in FIG. 3B, the augmented reality element 312c includes selectable emoticon elements that allow the user of the mobile computing device 300 to express an emotion. For example, in response to detecting a selection of the first emoticon element, the augmented reality system 100 can determine that the user of the mobile computing device 300 is feeling "chill." In one or more embodiments, the augmented reality system 100 utilizes this selection in a resulting networking system post or message.

Also shown in FIG. 3B, in response to analyzing networking system activity information (e.g., to determine that the user of the mobile computing device 300 is celebrating a birthday), the augmented reality system 100 can generate and provide the augmented reality element 312d. In one or more embodiments, the augmented reality element 312d is associated with a filter that corresponds with the characteristics analyzed by the augmented reality system 100. For example, in response to detecting a selection of the augmented reality element 312d, the augmented reality system 100 can add a filter elements (e.g., animations, stickers, borders, color changes, etc.) to the camera viewfinder display 304. For example, a selection of the augmented reality element 312d causes streamers and party balloons to appear overlaid on the camera viewfinder display 304 and any resulting digital pictures or videos captured from the camera viewfinder display 304.

Additionally as shown in FIG. 3B, the augmented reality system 100 can provide standard augmented reality elements to the camera viewfinder display 304. For example, the augmented reality system 100 can provide the augmented reality element 312e as a matter of course to all networking system users who opt in to the features and functionality of the augmented reality system 100. In response to detecting a selection of the augmented reality element 312e, the augmented reality system 100 can overlay a touch screen keyboard on the camera viewfinder display 304 and can convert the augmented reality element 312e to a text box wherein the user of the mobile computing device 300 can input a message. In one or more embodiments, the augmented reality system 100 utilizes the message provided by the user of the mobile computing device 300 in a networking system post or message.

In one or more embodiments, the user of the mobile computing device 300 can remove any of the augmented reality elements 312a-312e from the camera viewfinder display 304. For example, if the augmented reality system 100 has incorrectly identified the location of the mobile computing device 300, the user of the mobile computing device 300 can remove the augmented reality element 312a from the camera viewfinder display 304 by pressing and swiping the augmented reality element 312a up off the camera viewfinder display 304, or by pressing and holding the augmented reality element 312a. In this way, the user has control over what is included in a resulting networking system post or message.

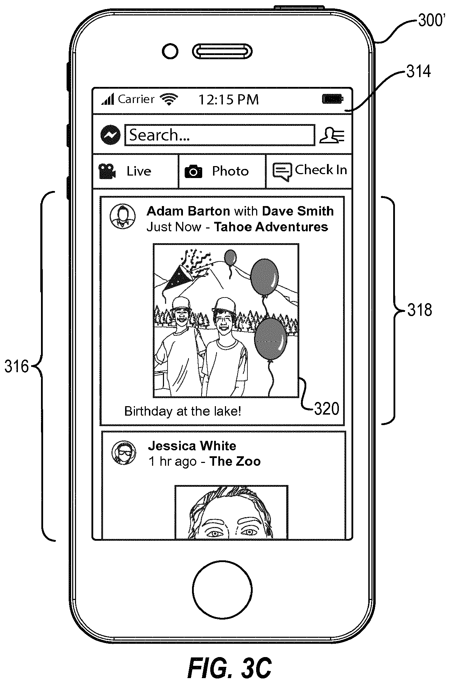

In one or more embodiments, as discussed above, the user of the mobile computing device 300 can compose a networking system post or message directly from the camera viewfinder display 304. For example, as shown in FIGS. 3B and 3C, in response to a single interaction from the user, the augmented reality system 100 can compose and send a post or message to the networking system 108 for distribution to one or more additional networking system users. In one embodiment, in response to detecting interactions with one or more of the augmented reality elements 312a-312e and a swipe touch gesture across the camera viewfinder display 304, the augmented reality system 100 can capture a digital picture from the camera viewfinder display 304 and compose a networking system post including the digital picture and elements/content that correspond to the one or more augmented reality elements 312a-312e with which the user interacted. Alternatively or additionally, the augmented reality system 100 can perform these same steps in response to detecting an interaction with the shutter button 306. In additional embodiments, the augmented reality system 100 can perform these steps in response to detecting other types of interactions with the mobile computing device 300 (e.g., a tilt, a shake, a verbal command, etc.).

For example, as shown in FIG. 3C, in response to detecting a swipe gesture in connection with the camera viewfinder display 304, the augmented reality system 100 can compose and send the post 318 to the networking system 108. FIG. 3C illustrates a networking system GUI 314 including a newsfeed 316 associated with a networking system user (e.g., the user of the mobile computing device 300, or another networking system user who is friends with the user of the mobile computing device 300 via the networking system 108). As shown, the post 318 includes a digital photograph 320 overlaid with the filter associated with the augmented reality element 312d. Additionally, the post 318 includes additional elements corresponding to other augmented reality elements provided to the user of the mobile computing device 300 (e.g., "Dave Smith" corresponding to the augmented reality element 312b, "Tahoe Adventures" corresponding to the augmented reality element 312a, "Birthday at the lake!" corresponding to input entered in connection with the augmented reality element 312e).

In an alternative embodiment, in response to detecting a swipe gesture in connection with the camera viewfinder display 304 in FIG. 3B, the augmented reality system 100 can provide a composer GUI wherein the user can view a composed post before the augmented reality system 100 sends the post to the networking system 108. For example, from the composer GUI, the user can edit tagged users, check-in locations, the digital picture or video that will be included with the post, and so forth. The user of the mobile computing device 300 can also specify privacy settings indicating one or more networking system friends who will receive the resulting post. If the user only selects one networking system friend, the networking system 108 will send the resulting post as an electronic message directly to that person. If the user selects a subgroup of his networking system friends, the networking system 108 may send the resulting post as a group electronic message.

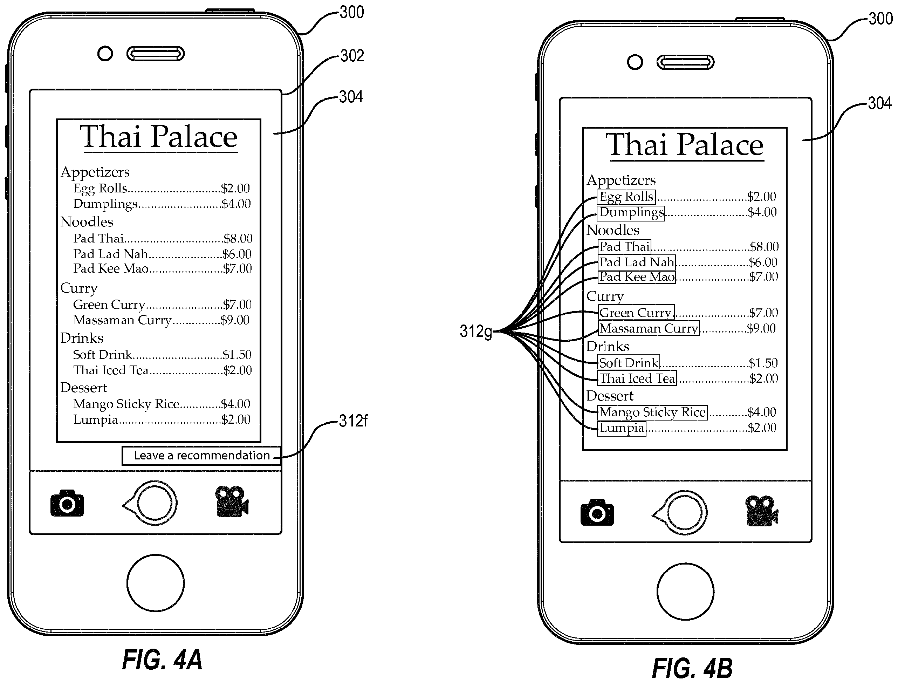

Another embodiment of the augmented reality system 100 is illustrated in FIGS. 4A-4D. For example, as discussed above, the augmented reality system 100 enables a user to create "leave behind" augmented reality elements. To illustrate the process of creating a leave-behind augmented reality element, FIG. 4A shows the camera viewfinder display 304 on the touch screen 302 of the mobile computing device 300. As shown, the user of the mobile computing device 300 is directing the camera of the mobile computing device 300 at a restaurant menu. In one or more embodiments, in response to determining that an image frame taken from the camera viewfinder display 304 includes a menu, the augmented reality system 100 provides the augmented reality element 312f that enables the user to leave a recommendation related to the restaurant.

In response to detecting a selection of the augmented reality element 312f, the augmented reality system 100 can utilize optical character recognition and other computer vision techniques to generate the augmented reality elements 312g (e.g., selectable boxes around each of the menu items). In response to detecting a selection of one of the augmented reality elements 312g, the augmented reality system 100 can provide additional augmented reality elements that enable the user to leave a recommendation for the selected menu item that is embodied in a leave-behind augmented reality element. In one or more embodiments, after generating the leave-behind augmented reality element associated with the menu item, the augmented reality system 100 anchors the leave-behind augmented reality element to the location where the element was generated (e.g., the location of the restaurant).

By utilizing the various tools provided by the augmented reality system 100, the user of the mobile computing device 300 can create various types of leave-behind augmented reality elements. For example, after detecting a selection of "Pad Thai," the augmented reality system 100 can provide a display of images of Pad Thai from which the user can select a particular image. In another example, the augmented reality system 100 can enable the user to take a video or photograph of his order of Pad Thai or of himself reacting to his order of Pad Thai. In yet another example, the augmented reality system 100 can utilize SLAM technology, described above, to create a 3D model based on a scan of the user's order of Pad Thai.

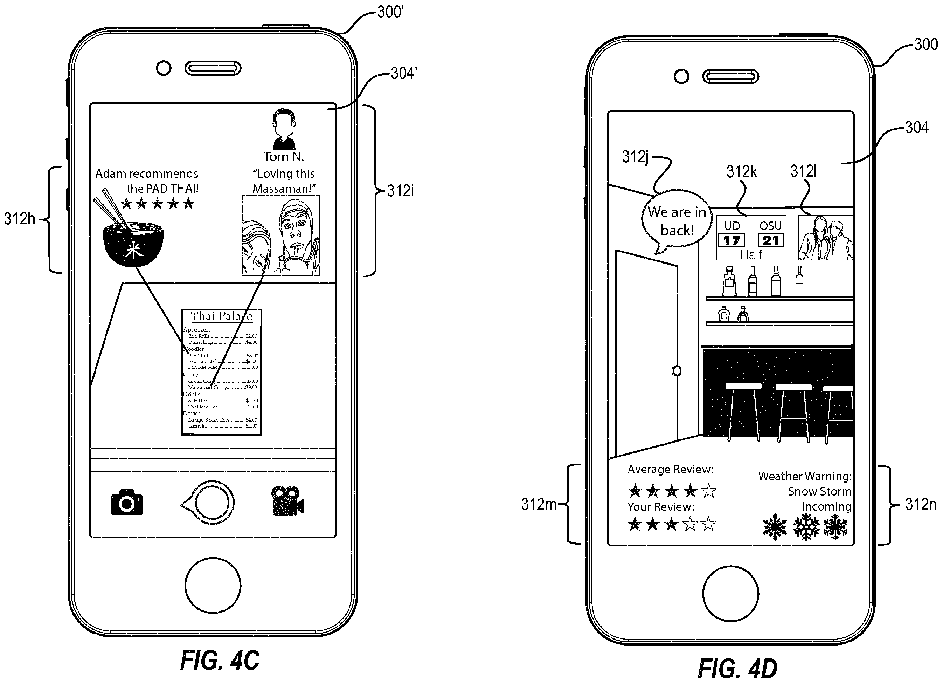

Later, when another networking system user views his camera viewfinder display at the location where the augmented reality system 100 has anchored the leave-behind augmented reality element, the augmented reality system 100 can provide the augmented reality element on that camera viewfinder display. For example, as shown in FIG. 4C, the user of the mobile computing device 300' is a networking system friend of the user of the mobile computing device 300. When the user of the mobile computing device 300' opens the camera viewfinder display 304', the augmented reality system 100 determines that the location of the mobile computing device 300' is the same restaurant where the user of the mobile computing device 300 created the leave-behind augmented reality element, discussed above. Accordingly, the augmented reality system 100 provides the leave-behind augmented reality element on the camera viewfinder display 304'. In one or more embodiments, the augmented reality system 100 provides the leave-behind augmented reality element in response to an analysis of characteristics associated with the leave-behind augmented reality element (e.g., whether the creator of the leave-behind augmented reality element specified that it should be generally available to networking system users, or only available to networking system friends, etc.), and an analysis of the characteristics associated with mobile computing device 300' and its user (e.g., whether there is a threshold relationship coefficient between the user of the mobile computing device 300' and the user of the mobile computing device 300, etc.).

As shown in FIG. 4C, the augmented reality system 100 can provide multiple leave-behind augmented reality elements (e.g., the augmented reality elements 312h and 312i) on the camera viewfinder display 304'. For example, the user of the mobile computing device 300' may have several networking system friends who have visited the same restaurant and have left behind augmented reality elements. Accordingly, when the user of the mobile computing device 300' opens the camera viewfinder display 304' and directs it at the same restaurant menu, the augmented reality system 100 provides the augmented reality elements 312h and 312i. In one or more embodiments, the augmented reality system 100 may provide the augmented reality elements 312h and 312i after determining that the relationship coefficient between the user of the mobile computing device 300' and the networking system users associated with the augmented reality elements 312h and 312i is above a threshold number. Furthermore, in one or more embodiments, there may be additionally provided augmented reality elements that are not displayed by the augmented reality system 100 due to display limitations, insufficient relationship coefficients, and so forth.

Also shown in FIG. 4C and as discussed above, the augmented reality system 100 can enable a networking system user to create various types of leave-behind augmented reality elements. For example, the augmented reality element 312h is a 3D model of a bowl of noodles with chopsticks. Additionally, the augmented reality element 312h includes a 5-star rating and text detailing "Adam recommends the PAD THAI!" In one or more embodiments, the augmented reality system 100 generates the augmented reality element 312h in response to the user of the mobile computing device 300 selecting the augmented reality element 312g associated with the "Pad Thai" menu item, and providing a description and rating, as discussed above. Furthermore, the augmented reality element 312h is anchored to a portion of the menu corresponding to the augmented reality element 312h. In particular, upon detecting the anchored portion of the menu within the image being displayed, the mobile computing device 300' displays the augmented reality element 312h at a location corresponding to the anchored portion of the menu and/or with visual elements indicating the connection of the augmented reality element 312h to the anchored portion of the menu.

Additionally, as shown in FIG. 4C, the augmented reality element 312i includes a digital video window playing a previously recorded digital video, along with a networking system user avatar and text (e.g., "Loving this Massaman!"). In one or more embodiments, when a user (e.g., "Tom N.") selected an augmented reality element associated with the "Massaman Curry" menu item and provided the augmented reality system 100 with a digital video of himself along with a description. Accordingly, in at least one embodiment, the digital video window included in the augmented reality element 312i can auto-play the digital video. Furthermore, as shown in FIG. 4C, in one or more embodiments, the augmented reality system 100 provides directional lines connecting the augmented reality elements 312h and 312i to their associated menu items.

In one or more embodiments, the augmented reality system 100 can provide a combination of personal leave-behind augmented reality elements, non-personal leave-behind augmented reality elements, general augmented reality elements, and third-party augmented reality elements. For example, as shown in FIG. 4D, the user of the mobile computing device 300 has accessed the camera viewfinder display 304 after walking into a bar. Accordingly, the augmented reality system 100 has determined the location of the mobile computing device 300 as well as other characteristic information associated with the mobile computing device 300 and the user of the mobile computing device 300, and has identified and provided the augmented reality elements 312j, 312k, 3121, 312m, and 312n.

In one or more embodiments, the augmented reality element 312j is a personal leave-behind augmented reality element that has been generated specifically for the user of the mobile computing device 300 by another networking system user who is meeting the user of the mobile computing device 300 at the bar. As shown in FIG. 4D, the augmented reality element 312j informs the user of the mobile computing device 300 where his group is located. In at least one embodiment, the networking system user who created the augmented reality element 312j specified the appearance and content of the augmented reality element 312j, the mapping position of the augmented reality element 312j (e.g., over the door), and the identity of the networking system user(s) to whom the augmented reality system 100 should provide the augmented reality element 312j. Thus, in at least one embodiment, the augmented reality system 100 only provides the augmented reality element 312j to the user of the mobile computing device 300 and to no one else.

In one or more embodiments, the augmented reality element 3121 is a non-personal leave-behind augmented reality element that has been generated for any networking system user who is friends with the creator of the augmented reality element 3121. For example, as shown in FIG. 4D, the augmented reality element 3121 is a digital photograph of two people that was taken by a friend of the user of the mobile computing device 300 at the bar where the mobile computing device 300 is currently located. Accordingly, in response to determining that the relationship coefficient between the user of the mobile computing device 300 and the networking system user who created the augmented reality element 3121 is sufficiently high, the augmented reality system 100 provides the augmented reality element 3121 on the camera viewfinder display 304. In additional embodiments, the augmented reality system 100 may have provided the augmented reality element 3121 in response to also determining that there was sufficient display space within the image shown in camera viewfinder display 304.

In one or more embodiments, the augmented reality element 312k is a general augmented reality element, generated by the augmented reality system 100 and anchored to the location of the bar. For example, in one embodiments, the augmented reality system 100 generates the augmented reality element 312k in response to determining that the bar is located near the university campus where lots of people watch university sports. Accordingly, while a game is ongoing, the augmented reality system 100 may generate and continually update the augmented reality element 312k to reflect the score of the university team's game. Furthermore, in at least one embodiment, the augmented reality system 100 may only provide the augmented reality element 312k to networking system users who have networking system activity history that reflects an interest in university sports. Thus, as shown in FIG. 4D, the augmented reality system 100 may have provided the augmented reality element 312k because the user of the mobile computing device 300 has frequently posted to the networking system 108 regarding university sports.

In one or more embodiments, the augmented reality elements 312m and 312n are third-party augmented reality elements. For example, in order to gather more data and engage more fully with users, the third party associated with the augmented reality element 312m may have partnered with the augmented reality system 100 to provide the augmented reality element 312m to networking system users who visit various locations. Accordingly, when the augmented reality system 100 detects that the mobile computing device 300 is located in one of the locations of interest to that third party, the augmented reality system 100 provides the augmented reality element 312m. As shown in FIG. 4D, the augmented reality element 312m is interactive and allows the user of the mobile computing device 300 to see the average review (e.g., provided by the third-party) for the bar, and to leave his personal review of the bar.

Furthermore, in one or more embodiments, the augmented reality system 100 can provide third-party content absent a partnership with the third party. For example, the augmented reality element 312n includes a weather warning and is provided by the augmented reality system 100 in response to determining that the mobile computing device 300 is not located at "home" (e.g., the location where the mobile computing device 300 spends the night). In other words, in one or more embodiments, the augmented reality system 100 monitors various third-party information services (e.g., the National Weather Service, various news sources, the Amber Alert System, etc.) in order to alert augmented reality system users of events and occurrences that might impact them.

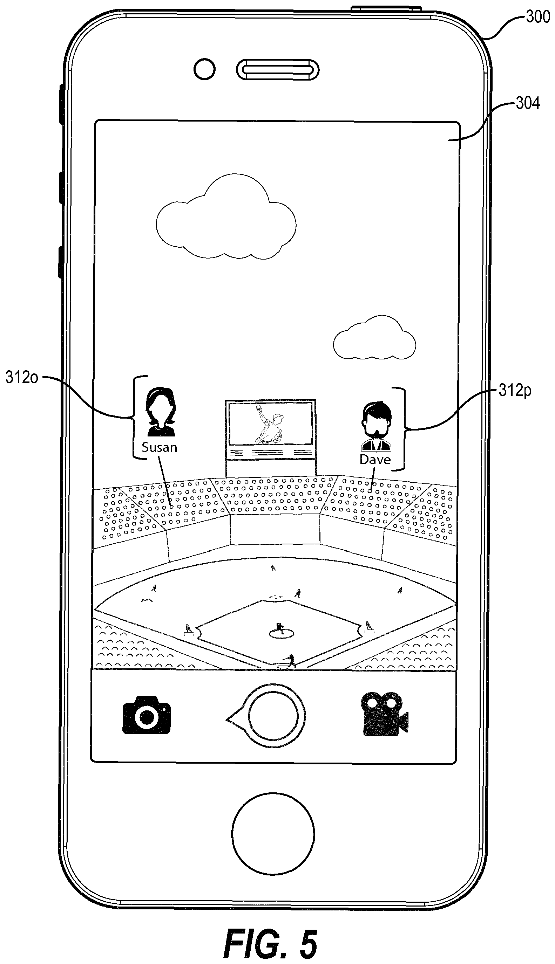

In another embodiment, the augmented reality system 100 can enable a user to generate an augmented reality element that is anchored to the location of the user's mobile computing device rather than being anchored to a stationary location. For example, as shown in FIG. 5, the user of the mobile computing device 300 may be attempting to meet up with a couple friends at a crowded baseball stadium. Accordingly, the augmented reality system 100 can enable a user to create an augmented reality element that includes a personal avatar. For example, as shown in FIG. 5, the augmented reality elements 312o and 312p include personal avatars as well as the user's names. In one or more embodiments, the augmented reality system 100 anchors each augmented reality element 312o, 312p to the location of the mobile computing device associated with each respective user. Thus, if the user associated with the augmented reality element 312o leaves the grand stands to pick up food from the concession stand, the augmented reality system 100 will cause her augmented reality element 312o to move with her (e.g., assuming she takes her mobile computing device along). Accordingly, when the user of the mobile computing device 300 accesses the camera viewfinder display 304, the augmented reality system 100 provides the augmented reality elements 312o, 312p, which assist the user of the mobile computing device 300 to quickly and easily locate his friends. In one or more embodiments, the users associated with the augmented reality elements 312o, 312p can specify who may see their avatars and locations, a duration of time during which their avatars may be presented, and so forth, thus preserving the users' privacy and/or providing the users various levels of privacy settings.

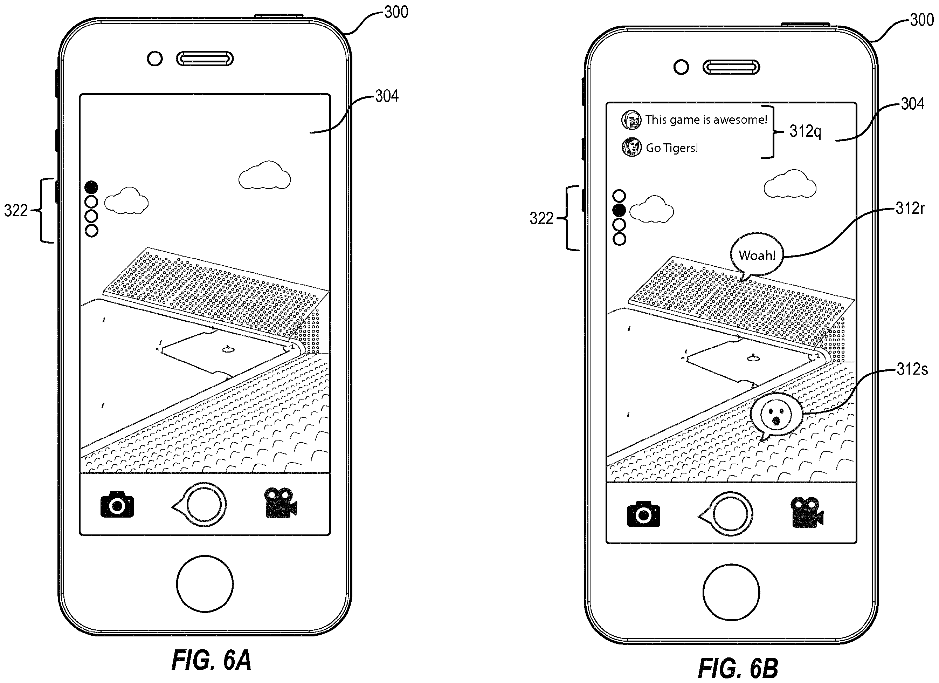

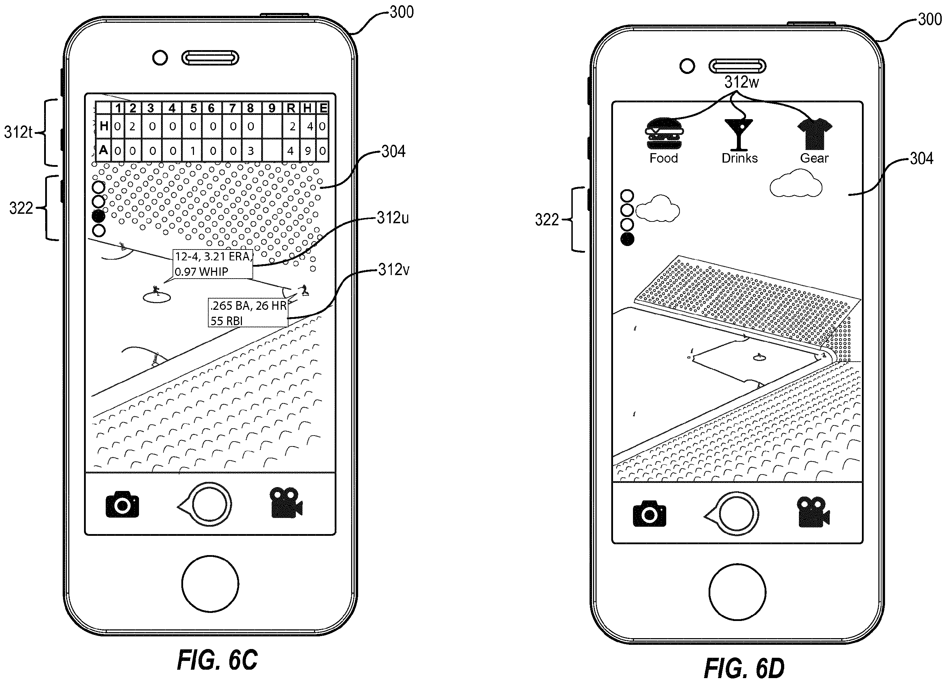

As mentioned above, the augmented reality system 100 can provide categories of augmented reality elements on the same camera viewfinder. For example, as shown in FIGS. 6A-6D, the augmented reality system 100 can provide categories of augmented reality elements through which the user of the mobile computing device 300 can swipe. For instance, as shown in FIG. 6A, the augmented reality system 100 can provide the category indicator 322 within the camera viewfinder display 304 of the mobile computing device 300. In one or more embodiments, the augmented reality system 100 provides a number of bubbles in the category indicator 322 that corresponds to the number of available categories of augmented reality elements that the augmented reality system 100 can provide within the camera viewfinder display 304. As shown in FIG. 6A, the first category (e.g., as indicated by the darkened first bubble in the category indicator 322) provided by the augmented reality system 100 simply includes the category indicator 322. As shown in FIG. 6A, the user of the mobile computing device 300 is viewing a baseball stadium through the camera viewfinder display 304. In this setting, the user can utilize the camera viewfinder display 304 in a standard mode (e.g., to capture standard images).

In one or more embodiments, the user of the mobile computing device 300 can transition to another category of augmented reality elements by swiping across the camera viewfinder display 304. In other embodiments, the user of the mobile computing device 300 can transition to another category of augmented reality elements by tapping the camera viewfinder display 304, by speaking a voice command, or by interacting with the camera viewfinder display 304 in some other way. For example, in response to detecting a swipe touch gesture across the camera viewfinder display 304, the augmented reality system 100 can provide a new category of augmented reality elements 312q, 312r, 312s that include networking system information, as shown in FIG. 6B.

To further illustrate, the augmented reality element 312q includes profile pictures and text from networking system posts that are relevant to the location of the mobile computing device 300. As mentioned above, the mobile computing device 300 is currently located at a baseball stadium. Accordingly, the augmented reality system 100 identifies and provides the components of the augmented reality element 312q in response to determining that the posts correspond with the baseball game, and/or that the networking system users associated with the posts have a relationship coefficient with the user of the mobile computing device 300 that is above a threshold number. In one or more embodiments, the users who provided the posts shown in the augmented reality element 312q are watching the baseball game from some other location.

Further, the augmented reality elements 312r and 312s include the contents of networking system posts that are relevant to the baseball stadium. In at least one embodiment, the networking system users associated with the posts depicted in 312r, 312s have no relationship coefficient with the user of the mobile computing device 300. Thus, in some embodiments, the augmented reality system 100 provides the augmented reality elements 312r 312s simply because their associated networking system posts are relevant to the baseball stadium and are being posted by other networking system users who are currently at the same location as the user of the mobile computing device 300.

In response to detecting another swipe touch gesture across the camera viewfinder display 304, the augmented reality system 100 can provide a category of augmented reality elements that are associated with partnered third-party content. For example, as shown in FIG. 6C, the augmented reality elements 312t, 312u, 312v include content from a partnered third party that is relevant to the location of the mobile computing device 300. In this example, the partnered third party is a sports broadcasting company that provides commentary and statistics for sports games. For instance, the augmented reality element 312t includes a scoreboard showing the runs scored in each inning of the current baseball game. Furthermore, the augmented reality elements 312u and 312v include player statistics and are anchored to the corresponding players.

In response to detecting yet another swipe touch gesture across the camera viewfinder display 304, the augmented reality system 100 can provide a category of augmented reality elements that are associated with third-party content (e.g., from either a partnered or un-partnered third party) that is relevant to the location of the mobile computing device 300. For example, in response to determining that the mobile computing device 300 is located at the baseball stadium, the augmented reality system 100 can generate and provide the augmented reality elements 312w. In one or more embodiments, the augmented reality elements 312w are associated with vendors located at the baseball stadium. Thus, in response to a user selecting one of the augmented reality elements 312w, the augmented reality system 100 redirect the mobile computing device 300 to a vendor website, or can provide further augmented reality elements associated with the vendor (e.g., an augmented reality element including a menu of offerings from the concession stand, augmented reality elements that enable the user to provide payment information, augmented reality elements indicating the locations of corresponding vendors, etc.). In at least one embodiment, the augmented reality system 100 can provide the functionality for the user to order and pay for food, drinks, and merchandise directly from the mobile computing device 300. Additionally, in at least one embodiment and depending on the user's privacy settings, the augmented reality system 100 can provide the location of the mobile computing device 300 to the vendor from whom the user has made a purchase to enable the vendor to deliver the purchased goods directly to the user's seat.

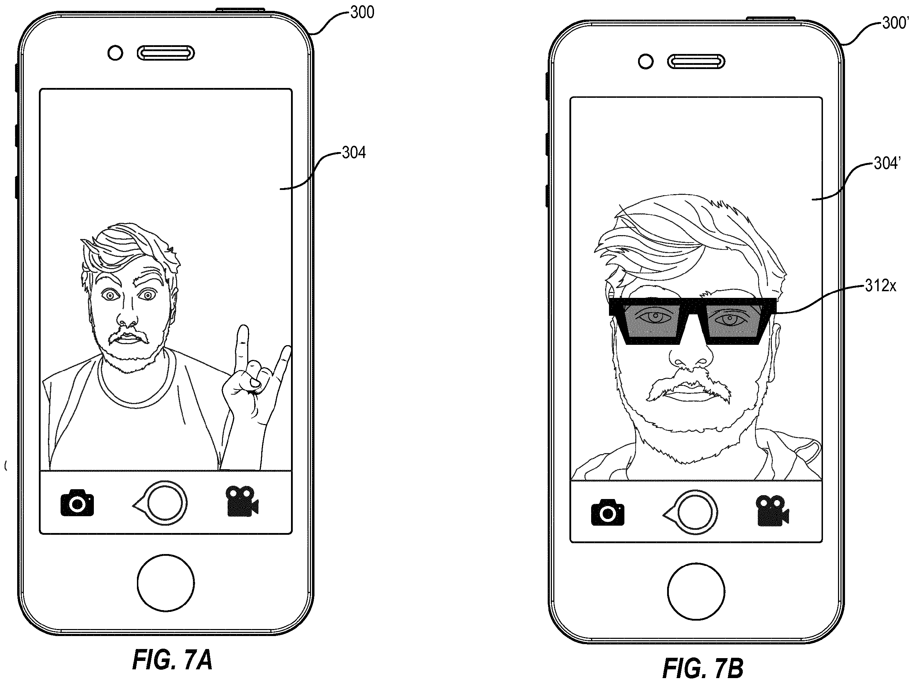

In yet another embodiment, the augmented reality system 100 can anchor an augmented reality element directly to a networking system user. For example, as shown in FIG. 7A, the augmented reality system 100 can detect (e.g., by image frame analysis, facial recognition, etc.) a predefined gesture performed by a networking system user (e.g., the "Rock On" hand gesture). In response to detecting this gesture, the augmented reality system 100 can generate the augmented reality element 312x, shown in FIG. 7B, and can then anchor the augmented reality element 312x to the networking system user who performed the gesture.

For example, as shown in FIG. 7A, the user performing the "Rock On" gesture within the camera viewfinder display 304 is the user of the mobile computing device 300 (e.g., the camera of the mobile computing device 300 is in "selfie" mode). Accordingly, after detecting the gesture, generating the augmented reality element 312x, and anchoring the augmented reality element 312x to the user of the mobile computing device 300, the augmented reality system 100 will display the augmented reality element 312x in connection with the user of the mobile computing device 300, even when the user is shown within a different camera viewfinder 304' on a different mobile computing device 300', as shown in FIG. 7B. In one or more embodiments, the augmented reality system 100 may anchor the augmented reality element 312x to the user of the mobile computing device 300 for a predetermined amount of time, may anchor the augmented reality element 312x to the user only while the user is within a particular geographic area, or may anchor the augmented reality element 312x to the user of the mobile computing device 300 until the user performs another gesture that can be recognized by the augmented reality system 100.

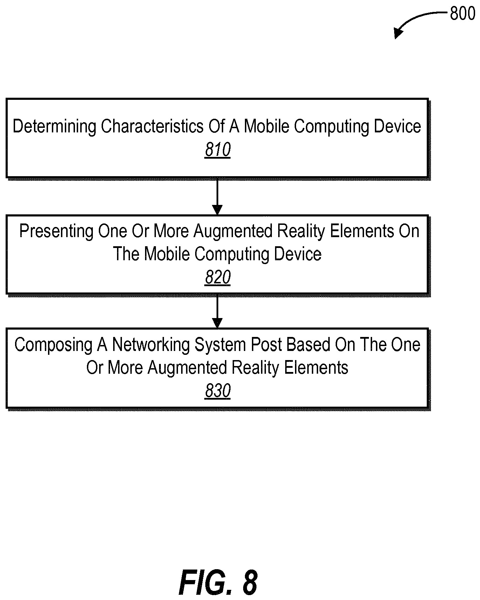

FIGS. 1-7B, the corresponding text and examples, provide a number of different methods, systems, and devices for utilizing augmented reality elements in connection with a camera viewfinder display. In addition to the foregoing, embodiments can also be described in terms of flowcharts comprising acts and steps in a method for accomplishing a particular result. For example, FIGS. 8-10 may be performed with less or more steps/acts or the steps/acts may be performed in differing orders. Additionally, the steps/acts described herein may be repeated or performed in parallel with one another or in parallel with different instances of the same or similar steps/acts.

FIG. 8 illustrates a flowchart of one example method 800 of composing a networking system post directly from a camera viewfinder display utilizing augmented reality elements. The method 800 includes an act 810 of determining characteristics of a mobile computing device. In particular, the act 810 can involve determining a plurality of characteristics of a mobile computing device of a networking system user. In one or more embodiments, determining the plurality of characteristics of the mobile computing device includes determining location information associated with the mobile computing device. Additionally, in at least one embodiment, determining the plurality of characteristics of the mobile computing device further includes identifying a networking system unique identifier associated with the user of the mobile computing device. Furthermore, in at least one embodiment, the method 800 includes providing the plurality of characteristics of the mobile computing device to a networking system, and receiving, from the networking system, a set of augmented reality elements corresponding to one or more of the plurality of characteristics of the mobile computing device.

Furthermore, the method 800 includes an act 820 of presenting one or more augmented reality elements on the mobile computing device. In particular, the act 820 can involve presenting, based on the plurality of characteristics of the mobile computing device, one or more augmented reality elements within a camera viewfinder display of the mobile computing device. For example, in one embodiment, the method 800 further includes identifying a subset of the set of augmented reality elements, wherein identifying the subset includes: calculating a score for each of the set of augmented reality elements, and wherein the subset of augmented reality elements comprise a threshold number of top-scoring augmented reality elements.

Furthermore, in one or more embodiments, calculating a score for each of the set of augmented reality elements includes, for each augmented reality element in the set of augmented reality elements, adding a weighted value to a score for the augmented reality element, wherein the weighted value represents a correlation between metadata associated with the augmented reality element and a plurality of display factors associated with the mobile computing device. In at least one embodiment, the plurality of display factors includes a resolution of a display of the mobile computing device, whether an image frame taken from the camera viewfinder display is crowded, and whether the user of the mobile computing device is likely to interact with the augmented reality element. Thus, in at least one embodiment, presenting the one or more augmented reality elements within the camera viewfinder display includes presenting the subset of augmented reality elements. Additionally, in at least one embodiment, presenting one or more augmented reality elements within a camera viewfinder display of the mobile computing device can include presenting third party augmented reality elements that correspond with a location of the mobile computing device.

Additionally, the method 800 includes an act 830 of composing a networking system post based on interactions with the one or more augmented reality elements. In particular, the act 830 can involve composing, in response to a received interaction with at least one of the one or more augmented reality elements, a networking system post. Additionally, in one embodiment, the method 800 includes detecting a swipe touch gesture in connection with the camera viewfinder display, and sending, in response to the detected swipe touch gesture, the composed networking system post.

Furthermore, in one or more embodiments, the method 800 includes an act of receiving an interaction with at least one of the one or more augmented reality elements, wherein receiving the interaction includes receiving a touch interaction with the camera viewfinder display of the mobile computing device. In at least one embodiment, the method 800 also includes, in response to receiving the interaction with the at least one of the one or more augmented reality elements, providing one or more payment tools within the camera viewfinder display.

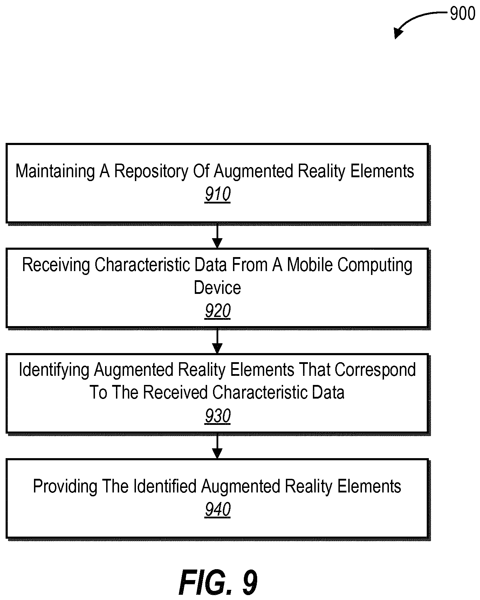

FIG. 9 illustrates a flowchart of one example method 900 of providing augmented reality elements to a mobile computing device. The method 900 includes an act 910 of maintaining a repository of augmented reality elements. In particular, the act 910 can involve maintaining, by one or more server devices, a plurality of augmented reality elements. For example, in one embodiment, maintaining the plurality of augmented reality elements further includes maintaining metadata for each of the plurality of augmented reality elements, wherein the metadata for each of the plurality of augmented reality elements comprises mapping requirements for each augmented reality element, and networking system information specific to each augmented reality element.

Furthermore, the method 900 includes an act 920 of receiving characteristic data from a mobile computing device. In particular, the act 920 can involve receiving, from a mobile computing device, a plurality of characteristic data, wherein the characteristic data includes characteristic data associated with the mobile computing device, and characteristic data associated with the user of the mobile computing device. For example, characteristic data associated with the mobile computing device can include location information associated with the mobile computing device. Additionally, characteristic data associated with the user of the mobile computing device can include one or more of a networking system unique identifier associated with the user of the mobile computing device, application usage history associated with the user of the mobile computing device, or contact information associated with the user of the mobile computing device.

Additionally, the method 900 includes an act 930 of identifying augmented reality elements that correspond to the received characteristic data. In particular, the act 930 can involve identifying, from the maintained plurality of augmented reality elements, one or more augmented reality elements that correspond to the received characteristic data. In one or more embodiments, identifying one or more augmented reality elements that correspond to the received characteristic data includes analyzing the received characteristic data to determine a location of the mobile computing device, and identifying one or more augmented reality elements that correspond to the location of the mobile computing device.

For example, analyzing the received characteristic data to determine the location of the mobile computing device can include analyzing one or more of GPS information, WiFi information, networking system information, or Internet searches in order to determine the location of the mobile computing device. Furthermore, identifying one or more augmented reality elements that correspond to the received characteristic data can also include: analyzing the received characteristic data to determine user characteristics comprising demographic information associated with the user of the mobile computing device, networking system profile information associated with the user of the mobile computing device, networking system activity history associated with the user of the mobile computing device, and networking system activity history associated with one or more co-users of the user of the mobile computing device; and identifying one or more augmented reality elements that correspond to the determined user characteristics. Additionally, in at least one embodiment, identifying one or more augmented reality elements that correspond to the received characteristic data further includes calculating a score for each of the one or more augmented reality elements that represents a correlation strength between the augmented reality element and the received characteristic data.

The method 900 also includes an act 940 of providing the identified augmented reality element 940. In particular, the act 940 can involve providing, to the mobile computing device and for display within a camera viewfinder display of the mobile computing device, the identified one or more augmented reality elements. In one or more embodiments, the method 900 includes acts of receiving data representative of a leave-behind augmented reality element, wherein the data comprises content of the leave-behind augmented reality element, and an anchor location associated with the leave-behind augmented reality element; generating the leave-behind augmented reality element comprising the received data; detecting when a networking system user associated with the user of the mobile computing device enters the anchor location; and providing the leave-behind augmented reality element to the networking system user.

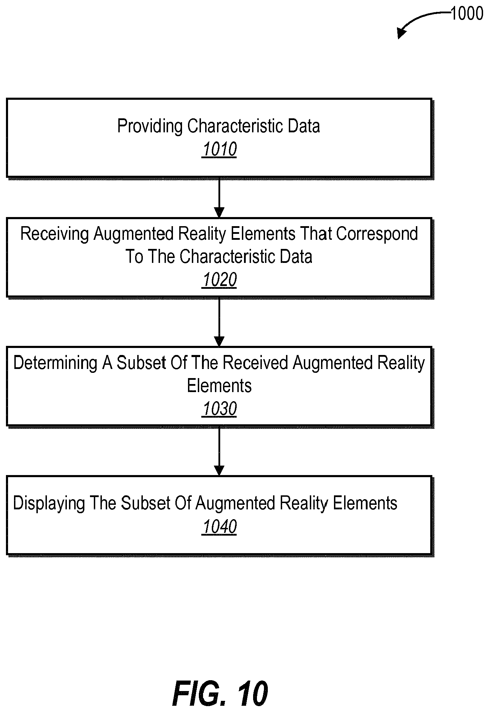

FIG. 10 illustrates a flowchart of one example method 1000 of displaying augmented reality elements on a camera viewfinder display of a mobile computing device. The method 1000 includes an act 1010 of providing characteristic data. In particular, the act 1010 involves providing, from a mobile computing device and to a networking system, a plurality of characteristic data, wherein the characteristic data comprises characteristic data associated with the mobile computing device, and characteristic data associated with the user of the mobile computing device. For example, in one embodiment, the characteristic data associated with the mobile computing device includes location information associated with the mobile computing device. Also, in one embodiment, characteristic data associated with the user of the mobile computing device includes one or more of a networking system unique identifier associated with the user of the mobile computing device, application usage history associated with the user of the mobile computing device, or contact information associated with the user of the mobile computing device.

Furthermore, the method 1000 includes an act 1020 of receiving augmented reality elements that correspond to the characteristic data. In particular, the act 1020 involves receiving, from the networking system, one or more augmented reality elements that correspond to the provided characteristic data. In one or more embodiments, the one or more augmented reality elements that correspond to the provided characteristic data include one or more of an augmented reality element that correlates with the location information associated with the mobile computing device, an augmented reality element that correlates with demographic information associated with the user of the mobile computing device, or an augmented reality element that correlates with networking system information associated with the user of the mobile computing device.

Additionally, the method 1000 includes an act 1030 of determining a subset of the received augmented reality elements. In particular, the act 1030 involves determining, based on an analysis of a plurality of display factors, a subset of the received one or more augmented reality elements. In one or more embodiments, the method 1000 further includes an act of identifying the plurality of display factors, wherein the plurality of display factors comprise one or more of a resolution of the camera viewfinder display, a level of crowded-ness in an image frame taken from an image feed displayed within the camera viewfinder display, an analysis of networking system information associated with the user of the mobile computing device, or an analysis of metadata associated with each of the one or more received augmented reality elements.

The method 1000 also includes an act 1040 of displaying the subset of augmented reality elements. In particular, the act 1040 involves displaying, on a camera viewfinder display of the mobile computing device, the subset of the received one or more augmented reality elements. Additionally, in one embodiment, the method 1000 includes an act of mapping each of the subset of the received one or more augmented reality elements to a point within the camera viewfinder display. In some embodiments, the method 1000 includes acts of detecting movement of the mobile computing device; and updating the camera viewfinder display such that each of the subset of received one or more augmented reality elements remains anchored to the mapped point associated with that augmented reality element.

Furthermore, in some embodiments, the method 1000 includes acts of detecting an interaction with a particular augmented reality element in the displayed subset of the received one or more augmented reality elements; and redirecting a display of the mobile computing device to a networking system application GUI comprising information associated with the particular augmented reality element. In at least one embodiment, the method 1000 further includes organizing, based on metadata associated with each augmented reality element in the subset, the subset of augmented reality elements into one or more categories; wherein displaying the subset of the received one or more augmented reality elements comprises displaying only one of the one or more categories of augmented reality elements within the camera viewfinder display at a time.

Embodiments of the present disclosure may comprise or utilize a special purpose or general-purpose computer including computer hardware, such as, for example, one or more processors and system memory, as discussed in greater detail below. Embodiments within the scope of the present disclosure also include physical and other computer-readable media for carrying or storing computer-executable instructions and/or data structures. In particular, one or more of the processes described herein may be implemented at least in part as instructions embodied in a non-transitory computer-readable medium and executable by one or more computing devices (e.g., any of the media content access devices described herein). In general, a processor (e.g., a microprocessor) receives instructions, from a non-transitory computer-readable medium, (e.g., a memory, etc.), and executes those instructions, thereby performing one or more processes, including one or more of the processes described herein.

Computer-readable media can be any available media that can be accessed by a general purpose or special purpose computer system. Computer-readable media that store computer-executable instructions are non-transitory computer-readable storage media (devices). Computer-readable media that carry computer-executable instructions are transmission media. Thus, by way of example, and not limitation, embodiments of the disclosure can comprise at least two distinctly different kinds of computer-readable media: non-transitory computer-readable storage media (devices) and transmission media.

Non-transitory computer-readable storage media (devices) includes RAM, ROM, EEPROM, CD-ROM, solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to non-transitory computer-readable storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. Thus, it should be understood that non-transitory computer-readable storage media (devices) can be included in computer system components that also (or even primarily) utilize transmission media.

Computer-executable instructions comprise, for example, instructions and data which, when executed at a processor, cause a general purpose computer, special purpose computer, or special purpose processing device to perform a certain function or group of functions. In some embodiments, computer-executable instructions are executed on a general-purpose computer to turn the general-purpose computer into a special purpose computer implementing elements of the disclosure. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Embodiments of the present disclosure can also be implemented in cloud computing environments. In this description, "cloud computing" is defined as a model for enabling on-demand network access to a shared pool of configurable computing resources. For example, cloud computing can be employed in the marketplace to offer ubiquitous and convenient on-demand access to the shared pool of configurable computing resources. The shared pool of configurable computing resources can be rapidly provisioned via virtualization and released with low management effort or service provider interaction, and then scaled accordingly.

A cloud-computing model can be composed of various characteristics such as, for example, on-demand self-service, broad network access, resource pooling, rapid elasticity, measured service, and so forth. A cloud-computing model can also expose various service models, such as, for example, Software as a Service ("SaaS"), Platform as a Service ("PaaS"), and Infrastructure as a Service ("IaaS"). A cloud-computing model can also be deployed using different deployment models such as private cloud, community cloud, public cloud, hybrid cloud, and so forth. In this description and in the claims, a "cloud-computing environment" is an environment in which cloud computing is employed.

FIG. 11 illustrates a block diagram of exemplary computing device 1100 that may be configured to perform one or more of the processes described above. One will appreciate that one or more computing devices such as the computing device 1100 may implement the augmented reality system 100. As shown by FIG. 11, the computing device 1100 can comprise a processor 1102, a memory 1104, a storage device 1106, an I/O interface 1108, and a communication interface 1110, which may be communicatively coupled by way of a communication infrastructure 1112. While an exemplary computing device 1100 is shown in FIG. 11, the components illustrated in FIG. 11 are not intended to be limiting. Additional or alternative components may be used in other embodiments. Furthermore, in certain embodiments, the computing device 1100 can include fewer components than those shown in FIG. 11. Components of the computing device 1100 shown in FIG. 11 will now be described in additional detail.

In one or more embodiments, the processor 1102 includes hardware for executing instructions, such as those making up a computer program. As an example and not by way of limitation, to execute instructions, the processor 1102 may retrieve (or fetch) the instructions from an internal register, an internal cache, the memory 1104, or the storage device 1106 and decode and execute them. In one or more embodiments, the processor 1102 may include one or more internal caches for data, instructions, or addresses. As an example and not by way of limitation, the processor 1102 may include one or more instruction caches, one or more data caches, and one or more translation lookaside buffers (TLBs). Instructions in the instruction caches may be copies of instructions in the memory 1104 or the storage device 1106.

The memory 1104 may be used for storing data, metadata, and programs for execution by the processor(s). The memory 1104 may include one or more of volatile and non-volatile memories, such as Random Access Memory ("RAM"), Read Only Memory ("ROM"), a solid state disk ("SSD"), Flash, Phase Change Memory ("PCM"), or other types of data storage. The memory 1104 may be internal or distributed memory.

The storage device 1106 includes storage for storing data or instructions. As an example and not by way of limitation, storage device 1106 can comprise a non-transitory storage medium described above. The storage device 1106 may include a hard disk drive (HDD), a floppy disk drive, flash memory, an optical disc, a magneto-optical disc, magnetic tape, or a Universal Serial Bus (USB) drive or a combination of two or more of these. The storage device 1106 may include removable or non-removable (or fixed) media, where appropriate. The storage device 1106 may be internal or external to the computing device 1100. In one or more embodiments, the storage device 1106 is non-volatile, solid-state memory. In other embodiments, the storage device 1106 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or flash memory or a combination of two or more of these.

The I/O interface 1108 allows a user to provide input to, receive output from, and otherwise transfer data to and receive data from computing device 1100. The I/O interface 1108 may include a mouse, a keypad or a keyboard, a touch screen, a camera, an optical scanner, network interface, modem, other known I/O devices or a combination of such I/O interfaces. The I/O interface 1108 may include one or more devices for presenting output to a user, including, but not limited to, a graphics engine, a display (e.g., a display screen), one or more output drivers (e.g., display drivers), one or more audio speakers, and one or more audio drivers. In certain embodiments, the I/O interface 1108 is configured to provide graphical data to a display for presentation to a user. The graphical data may be representative of one or more graphical user interfaces and/or any other graphical content as may serve a particular implementation.

The communication interface 1110 can include hardware, software, or both. In any event, the communication interface 1110 can provide one or more interfaces for communication (such as, for example, packet-based communication) between the computing device 1100 and one or more other computing devices or networks. As an example and not by way of limitation, the communication interface 1110 may include a network interface controller (NIC) or network adapter for communicating with an Ethernet or other wire-based network or a wireless NIC (WNIC) or wireless adapter for communicating with a wireless network, such as a WI-FI.

Additionally or alternatively, the communication interface 1110 may facilitate communications with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, the communication interface 1110 may facilitate communications with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination thereof.

Additionally, the communication interface 1110 may facilitate communications various communication protocols. Examples of communication protocols that may be used include, but are not limited to, data transmission media, communications devices, Transmission Control Protocol ("TCP"), Internet Protocol ("IP"), File Transfer Protocol ("FTP"), Telnet, Hypertext Transfer Protocol ("HTTP"), Hypertext Transfer Protocol Secure ("HTTPS"), Session Initiation Protocol ("SIP"), Simple Object Access Protocol ("SOAP"), Extensible Mark-up Language ("XML") and variations thereof, Simple Mail Transfer Protocol ("SMTP"), Real-Time Transport Protocol ("RTP"), User Datagram Protocol ("UDP"), Global System for Mobile Communications ("GSM") technologies, Code Division Multiple Access ("CDMA") technologies, Time Division Multiple Access ("TDMA") technologies, Short Message Service ("SMS"), Multimedia Message Service ("MMS"), radio frequency ("RF") signaling technologies, Long Term Evolution ("LTE") technologies, wireless communication technologies, in-band and out-of-band signaling technologies, and other suitable communications networks and technologies.

The communication infrastructure 1112 may include hardware, software, or both that couples components of the computing device 1100 to each other. As an example and not by way of limitation, the communication infrastructure 1112 may include an Accelerated Graphics Port (AGP) or other graphics bus, an Enhanced Industry Standard Architecture (EISA) bus, a front-side bus (FSB), a HYPER-TRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination thereof.

As mentioned above, the augmented reality system 100 can comprise a social networking system. A social networking system may enable its users (such as persons or organizations) to interact with the system and with each other. The social networking system may, with input from a user, create and store in the social networking system a user profile associated with the user. The user profile may include demographic information, communication-channel information, and information on personal interests of the user. The social networking system may also, with input from a user, create and store a record of relationships of the user with other users of the social networking system, as well as provide services (e.g., posts, photo-sharing, event organization, messaging, games, or advertisements) to facilitate social interaction between or among users.

The social networking system may store records of users and relationships between users in a social graph comprising a plurality of nodes and a plurality of edges connecting the nodes. The nodes may comprise a plurality of user nodes and a plurality of concept nodes. A user node of the social graph may correspond to a user of the social networking system. A user may be an individual (human user), an entity (e.g., an enterprise, business, or third party application), or a group (e.g., of individuals or entities). A user node corresponding to a user may comprise information provided by the user and information gathered by various systems, including the social networking system.

For example, the user may provide his or her name, profile picture, city of residence, contact information, birth date, gender, marital status, family status, employment, educational background, preferences, interests, and other demographic information to be included in the user node. Each user node of the social graph may have a corresponding web page (typically known as a profile page). In response to a request including a user name, the social networking system can access a user node corresponding to the user name, and construct a profile page including the name, a profile picture, and other information associated with the user. A profile page of a first user may display to a second user all or a portion of the first user's information based on one or more privacy settings by the first user and the relationship between the first user and the second user.

A concept node may correspond to a concept of the social networking system. For example, a concept can represent a real-world entity, such as a movie, a song, a sports team, a celebrity, a group, a restaurant, or a place or a location. An administrative user of a concept node corresponding to a concept may create or update the concept node by providing information of the concept (e.g., by filling out an online form), causing the social networking system to associate the information with the concept node. For example and without limitation, information associated with a concept can include a name or a title, one or more images (e.g., an image of cover page of a book), a web site (e.g., an URL address) or contact information (e.g., a phone number, an email address). Each concept node of the social graph may correspond to a web page. For example, in response to a request including a name, the social networking system can access a concept node corresponding to the name, and construct a web page including the name and other information associated with the concept.

An edge between a pair of nodes may represent a relationship between the pair of nodes. For example, an edge between two user nodes can represent a friendship between two users. For another example, the social networking system may construct a web page (or a structured document) of a concept node (e.g., a restaurant, a celebrity), incorporating one or more selectable option or selectable elements (e.g., "like", "check in") in the web page. A user can access the page using a web browser hosted by the user's client device and select a selectable option or selectable element, causing the client device to transmit to the social networking system a request to create an edge between a user node of the user and a concept node of the concept, indicating a relationship between the user and the concept (e.g., the user checks in a restaurant, or the user "likes" a celebrity).

As an example, a user may provide (or change) his or her city of residence, causing the social networking system to create an edge between a user node corresponding to the user and a concept node corresponding to the city declared by the user as his or her city of residence. In addition, the degree of separation between any two nodes is defined as the minimum number of hops required to traverse the social graph from one node to the other. A degree of separation between two nodes can be considered a measure of relatedness between the users or the concepts represented by the two nodes in the social graph. For example, two users having user nodes that are directly connected by an edge (i.e., are first-degree nodes) may be described as "connected users" or "friends." Similarly, two users having user nodes that are connected only through another user node (i.e., are second-degree nodes) may be described as "friends of friends."

A social networking system may support a variety of applications, such as photo sharing, on-line calendars and events, gaming, instant messaging, and advertising. For example, the social networking system may also include media sharing capabilities. Also, the social networking system may allow users to post photographs and other multimedia content items to a user's profile page (typically known as "wall posts" or "timeline posts") or in a photo album, both of which may be accessible to other users of the social networking system depending upon the user's configured privacy settings. The social networking system may also allow users to configure events. For example, a first user may configure an event with attributes including time and date of the event, location of the event and other users invited to the event. The invited users may receive invitations to the event and respond (such as by accepting the invitation or declining it). Furthermore, the social networking system may allow users to maintain a personal calendar. Similarly to events, the calendar entries may include times, dates, locations and identities of other users.

FIG. 12 illustrates an example network environment 1200 of a social networking system. Network environment 1200 includes a client device 1206, a networking system 1202, and a third-party system 1208 connected to each other by a network 1204. Although FIG. 12 illustrates a particular arrangement of client device 1206, networking system 1202, third-party system 1208, and network 1204, this disclosure contemplates any suitable arrangement of client device 1206, networking system 1202, third-party system 1208, and network 1204. As an example and not by way of limitation, two or more of client device 1206, networking system 1202, and third-party system 1208 may be connected to each other directly, bypassing network 1204. As another example, two or more of client device 1206, networking system 1202, and third-party system 1208 may be physically or logically co-located with each other in whole or in part. Moreover, although FIG. 12 illustrates a particular number of client devices 1206, networking systems 1202, third-party systems 1208, and networks 1204, this disclosure contemplates any suitable number of client devices 1206, networking systems 1202, third-party systems 1208, and networks 1204. As an example and not by way of limitation, network environment 1200 may include multiple client device 1206, networking systems 1202, third-party systems 1208, and networks 1204.

This disclosure contemplates any suitable network 1204. As an example and not by way of limitation, one or more portions of network 1204 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 1204 may include one or more networks 1204.

Links may connect client device 1206, networking system 1202, and third-party system 1208 to communication network 1204 or to each other. This disclosure contemplates any suitable links. In particular embodiments, one or more links include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular embodiments, one or more links each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link, or a combination of two or more such links. Links need not necessarily be the same throughout network environment 1200. One or more first links may differ in one or more respects from one or more second links.

In particular embodiments, client device 1206 may be an electronic device including hardware, software, or embedded logic components or a combination of two or more such components and capable of carrying out the appropriate functionalities implemented or supported by client device 1206. As an example and not by way of limitation, a client device 1206 may include a computer system such as a desktop computer, notebook or laptop computer, netbook, a tablet computer, e-book reader, GPS device, camera, personal digital assistant (PDA), handheld electronic device, cellular telephone, smartphone, other suitable electronic device, or any suitable combination thereof. This disclosure contemplates any suitable client devices 1206. A client device 1206 may enable a network user at client device 1206 to access network 1204. A client device 1206 may enable its user to communicate with other users at other client devices 1206.

In particular embodiments, client device 1206 may include a web browser, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user at client device 1206 may enter a Uniform Resource Locator (URL) or other address directing the web browser to a particular server (such as server, or a server associated with a third-party system 1208), and the web browser may generate a Hyper Text Transfer Protocol (HTTP) request and communicate the HTTP request to server. The server may accept the HTTP request and communicate to client device 1206 one or more Hyper Text Markup Language (HTML) files responsive to the HTTP request. Client device 1206 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a webpage encompasses one or more corresponding webpage files (which a browser may use to render the webpage) and vice versa, where appropriate.

In particular embodiments, networking system 1202 may be a network-addressable computing system that can host an online social network. Networking system 1202 may generate, store, receive, and send social-networking data, such as, for example, user-profile data, concept-profile data, social-graph information, or other suitable data related to the online social network. Networking system 1202 may be accessed by the other components of network environment 1200 either directly or via network 1204. In particular embodiments, networking system 1202 may include one or more servers. Each server may be a unitary server or a distributed server spanning multiple computers or multiple datacenters. Servers may be of various types, such as, for example and without limitation, web server, news server, mail server, message server, advertising server, file server, application server, exchange server, database server, proxy server, another server suitable for performing functions or processes described herein, or any combination thereof. In particular embodiments, each server may include hardware, software, or embedded logic components or a combination of two or more such components for carrying out the appropriate functionalities implemented or supported by server. In particular embodiments, networking system 1202 may include one or more data stores. Data stores may be used to store various types of information. In particular embodiments, the information stored in data stores may be organized according to specific data structures. In particular embodiments, each data store may be a relational, columnar, correlation, or other suitable database. Although this disclosure describes or illustrates particular types of databases, this disclosure contemplates any suitable types of databases. Particular embodiments may provide interfaces that enable a client device 1206, a networking system 1202, or a third-party system 1208 to manage, retrieve, modify, add, or delete, the information stored in data store.

In particular embodiments, networking system 1202 may store one or more social graphs in one or more data stores. In particular embodiments, a social graph may include multiple nodes-which may include multiple user nodes (each corresponding to a particular user) or multiple concept nodes (each corresponding to a particular concept)-and multiple edges connecting the nodes. Networking system 1202 may provide users of the online social network the ability to communicate and interact with other users. In particular embodiments, users may join the online social network via networking system 1202 and then add connections (e.g., relationships) to a number of other users of networking system 1202 that they want to be connected to. Herein, the term "friend" may refer to any other user of networking system 1202 with whom a user has formed a connection, association, or relationship via networking system 1202.

In particular embodiments, networking system 1202 may provide users with the ability to take actions on various types of items or objects, supported by networking system 1202. As an example and not by way of limitation, the items and objects may include groups or social networks to which users of networking system 1202 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in networking system 1202 or by an external system of third-party system 1208, which is separate from networking system 1202 and coupled to networking system 1202 via a network 1204.

In particular embodiments, networking system 1202 may be capable of linking a variety of entities. As an example and not by way of limitation, networking system 1202 may enable users to interact with each other as well as receive content from third-party systems 1208 or other entities, or to allow users to interact with these entities through an application programming interfaces (API) or other communication channels.

In particular embodiments, a third-party system 1208 may include one or more types of servers, one or more data stores, one or more interfaces, including but not limited to APIs, one or more web services, one or more content sources, one or more networks, or any other suitable components, e.g., that servers may communicate with. A third-party system 1208 may be operated by a different entity from an entity operating networking system 1202. In particular embodiments, however, networking system 1202 and third-party systems 1208 may operate in conjunction with each other to provide social-networking services to users of networking system 1202 or third-party systems 1208. In this sense, networking system 1202 may provide a platform, or backbone, which other systems, such as third-party systems 1208, may use to provide social-networking services and functionality to users across the Internet.

In particular embodiments, a third-party system 1208 may include a third-party content object provider. A third-party content object provider may include one or more sources of content objects, which may be communicated to a client device 1206. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular embodiments, networking system 1202 also includes user-generated content objects, which may enhance a user's interactions with networking system 1202. User-generated content may include anything a user can add, upload, send, or "post" to networking system 1202. As an example and not by way of limitation, a user communicates posts to networking system 1202 from a client device 1206. Posts may include data such as status updates or other textual data, location information, photos, videos, links, music or other similar data or media. Content may also be added to networking system 1202 by a third-party through a "communication channel," such as a newsfeed or stream.

In particular embodiments, networking system 1202 may include a variety of servers, sub-systems, programs, modules, logs, and data stores. In particular embodiments, networking system 1202 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Networking system 1202 may also include suitable components such as network interfaces, security mechanisms, load balancers, failover servers, management-and-network-operations consoles, other suitable components, or any suitable combination thereof. In particular embodiments, networking system 1202 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking networking system 1202 to one or more client devices 1206 or one or more third-party system 1208 via network 1204. The web server may include a mail server or other messaging functionality for receiving and routing messages between networking system 1202 and one or more client devices 1206. An API-request server may allow a third-party system 1208 to access information from networking system 1202 by calling one or more APIs. An action logger may be used to receive communications from a web server about a user's actions on or off networking system 1202. In conjunction with the action log, a third-party-content-object log may be maintained of user exposures to third-party-content objects. A notification controller may provide information regarding content objects to a client device 1206. Information may be pushed to a client device 1206 as notifications, or information may be pulled from client device 1206 responsive to a request received from client device 1206. Authorization servers may be used to enforce one or more privacy settings of the users of networking system 1202. A privacy setting of a user determines how particular information associated with a user can be shared. The authorization server may allow users to opt in to or opt out of having their actions logged by networking system 1202 or shared with other systems (e.g., third-party system 1208), such as, for example, by setting appropriate privacy settings. Third-party-content-object stores may be used to store content objects received from third parties, such as a third-party system 1208. Location stores may be used for storing location information received from client devices 1206 associated with users. Advertisement-pricing modules may combine social information, the current time, location information, or other suitable information to provide relevant advertisements, in the form of notifications, to a user.

FIG. 13 illustrates example social graph 1300. In particular embodiments, networking system 1202 may store one or more social graphs 1300 in one or more data stores. In particular embodiments, social graph 1300 may include multiple nodes-which may include multiple user nodes 1302 or multiple concept nodes 1304-and multiple edges 1306 connecting the nodes. Example social graph 1300 illustrated in FIG. 13 is shown, for didactic purposes, in a two-dimensional visual map representation. In particular embodiments, a networking system 1202, client device 1206, or third-party system 1208 may access social graph 1300 and related social-graph information for suitable applications. The nodes and edges of social graph 1300 may be stored as data objects, for example, in a data store (such as a social-graph database). Such a data store may include one or more searchable or query able indexes of nodes or edges of social graph 1300.

In particular embodiments, a user node 1302 may correspond to a user of networking system 1202. As an example and not by way of limitation, a user may be an individual (human user), an entity (e.g., an enterprise, business, or third-party application), or a group (e.g., of individuals or entities) that interacts or communicates with or over networking system 1202. In particular embodiments, when a user registers for an account with networking system 1202, networking system 1202 may create a user node 1302 corresponding to the user, and store the user node 1302 in one or more data stores. Users and user nodes 1302 described herein may, where appropriate, refer to registered users and user nodes 1302 associated with registered users. In addition or as an alternative, users and user nodes 1302 described herein may, where appropriate, refer to users that have not registered with networking system 1202. In particular embodiments, a user node 1302 may be associated with information provided by a user or information gathered by various systems, including networking system 1202. As an example and not by way of limitation, a user may provide his or her name, profile picture, contact information, birth date, sex, marital status, family status, employment, education background, preferences, interests, or other demographic information. In particular embodiments, a user node 1302 may be associated with one or more data objects corresponding to information associated with a user. In particular embodiments, a user node 1302 may correspond to one or more webpages.

In particular embodiments, a concept node 1304 may correspond to a concept. As an example and not by way of limitation, a concept may correspond to a place (such as, for example, a movie theater, restaurant, landmark, or city); a website (such as, for example, a website associated with networking system 1202 or a third-party website associated with a web-application server); an entity (such as, for example, a person, business, group, sports team, or celebrity); a resource (such as, for example, an audio file, video file, digital photo, text file, structured document, or application) which may be located within networking system 1202 or on an external server, such as a web-application server; real or intellectual property (such as, for example, a sculpture, painting, movie, game, song, idea, photograph, or written work); a game; an activity; an idea or theory; another suitable concept; or two or more such concepts. A concept node 1304 may be associated with information of a concept provided by a user or information gathered by various systems, including networking system 1202. As an example and not by way of limitation, information of a concept may include a name or a title; one or more images (e.g., an image of the cover page of a book); a location (e.g., an address or a geographical location); a website (which may be associated with a URL); contact information (e.g., a phone number or an email address); other suitable concept information; or any suitable combination of such information. In particular embodiments, a concept node 1304 may be associated with one or more data objects corresponding to information associated with concept node 1304. In particular embodiments, a concept node 1304 may correspond to one or more webpages.

In particular embodiments, a node in social graph 1300 may represent or be represented by a webpage (which may be referred to as a "profile page"). Profile pages may be hosted by or accessible to networking system 1202. Profile pages may also be hosted on third-party websites associated with a third-party system 1208. As an example and not by way of limitation, a profile page corresponding to a particular external webpage may be the particular external webpage and the profile page may correspond to a particular concept node 1304. Profile pages may be viewable by all or a selected subset of other users. As an example and not by way of limitation, a user node 1302 may have a corresponding user-profile page in which the corresponding user may add content, make declarations, or otherwise express himself or herself. As another example and not by way of limitation, a concept node 1304 may have a corresponding concept-profile page in which one or more users may add content, make declarations, or express themselves, particularly in relation to the concept corresponding to concept node 1304.

In particular embodiments, a concept node 1304 may represent a third-party webpage or resource hosted by a third-party system 1208. The third-party webpage or resource may include, among other elements, content, a selectable or other icon, or other inter-actable object (which may be implemented, for example, in JavaScript, AJAX, or PHP codes) representing an action or activity. As an example and not by way of limitation, a third-party webpage may include a selectable icon such as "like," "check in," "eat," "recommend," or another suitable action or activity. A user viewing the third-party webpage may perform an action by selecting one of the icons (e.g., "eat"), causing a client device 1206 to send to networking system 1202 a message indicating the user's action. In response to the message, networking system 1202 may create an edge (e.g., an "eat" edge) between a user node 1302 corresponding to the user and a concept node 1304 corresponding to the third-party webpage or resource and store edge 1306 in one or more data stores.

In particular embodiments, a pair of nodes in social graph 1300 may be connected to each other by one or more edges 1306. An edge 1306 connecting a pair of nodes may represent a relationship between the pair of nodes. In particular embodiments, an edge 1306 may include or represent one or more data objects or attributes corresponding to the relationship between a pair of nodes. As an example and not by way of limitation, a first user may indicate that a second user is a "friend" of the first user. In response to this indication, networking system 1202 may send a "friend request" to the second user. If the second user confirms the "friend request," networking system 1202 may create an edge 1306 connecting the first user's user node 1302 to the second user's user node 1302 in social graph 1300 and store edge 1306 as social-graph information in one or more of data stores. In the example of FIG. 13, social graph 1300 includes an edge 1306 indicating a friend relation between user nodes 1302 of user "A" and user "B" and an edge indicating a friend relation between user nodes 1302 of user "C" and user "B." Although this disclosure describes or illustrates particular edges 1306 with particular attributes connecting particular user nodes 1302, this disclosure contemplates any suitable edges 1306 with any suitable attributes connecting user nodes 1302. As an example and not by way of limitation, an edge 1306 may represent a friendship, family relationship, business or employment relationship, fan relationship, follower relationship, visitor relationship, subscriber relationship, superior/subordinate relationship, reciprocal relationship, non-reciprocal relationship, another suitable type of relationship, or two or more such relationships. Moreover, although this disclosure generally describes nodes as being connected, this disclosure also describes users or concepts as being connected. Herein, references to users or concepts being connected may, where appropriate, refer to the nodes corresponding to those users or concepts being connected in social graph 1300 by one or more edges 1306.

In particular embodiments, an edge 1306 between a user node 1302 and a concept node 1304 may represent a particular action or activity performed by a user associated with user node 1302 toward a concept associated with a concept node 1304. As an example and not by way of limitation, as illustrated in FIG. 13, a user may "like," "attended," "played," "listened," "cooked," "worked at," or "watched" a concept, each of which may correspond to an edge type or subtype. A concept-profile page corresponding to a concept node 1304 may include, for example, a selectable "check in" icon (such as, for example, a clickable "check in" icon) or a selectable "add to favorites" icon. Similarly, after a user clicks these icons, networking system 1202 may create a "favorite" edge or a "check in" edge in response to a user's action corresponding to a respective action. As another example and not by way of limitation, a user (user "C") may listen to a particular song ("Ramble On") using a particular application (SPOTIFY, which is an online music application). In this case, networking system 1202 may create a "listened" edge 1306 and a "used" edge (as illustrated in FIG. 13) between user nodes 1302 corresponding to the user and concept nodes 1304 corresponding to the song and application to indicate that the user listened to the song and used the application. Moreover, networking system 1202 may create a "played" edge 1306 (as illustrated in FIG. 13) between concept nodes 1304 corresponding to the song and the application to indicate that the particular song was played by the particular application. In this case, "played" edge 1306 corresponds to an action performed by an external application (SPOTIFY) on an external audio file (the song "Imagine"). Although this disclosure describes particular edges 1306 with particular attributes connecting user nodes 1302 and concept nodes 1304, this disclosure contemplates any suitable edges 1306 with any suitable attributes connecting user nodes 1302 and concept nodes 1304. Moreover, although this disclosure describes edges between a user node 1302 and a concept node 1304 representing a single relationship, this disclosure contemplates edges between a user node 1302 and a concept node 1304 representing one or more relationships. As an example and not by way of limitation, an edge 1306 may represent both that a user likes and has used at a particular concept. Alternatively, another edge 1306 may represent each type of relationship (or multiples of a single relationship) between a user node 1302 and a concept node 1304 (as illustrated in FIG. 13 between user node 1302 for user "E" and concept node 1304 for "SPOTIFY").

In particular embodiments, networking system 1202 may create an edge 1306 between a user node 1302 and a concept node 1304 in social graph 1300. As an example and not by way of limitation, a user viewing a concept-profile page (such as, for example, by using a web browser or a special-purpose application hosted by the user's client device 1206) may indicate that he or she likes the concept represented by the concept node 1304 by clicking or selecting a "Like" icon, which may cause the user's client device 1206 to send to networking system 1202 a message indicating the user's liking of the concept associated with the concept-profile page. In response to the message, networking system 1202 may create an edge 1306 between user node 1302 associated with the user and concept node 1304, as illustrated by "like" edge 1306 between the user and concept node 1304. In particular embodiments, networking system 1202 may store an edge 1306 in one or more data stores. In particular embodiments, an edge 1306 may be automatically formed by networking system 1202 in response to a particular user action. As an example and not by way of limitation, if a first user uploads a picture, watches a movie, or listens to a song, an edge 1306 may be formed between user node 1302 corresponding to the first user and concept nodes 1304 corresponding to those concepts. Although this disclosure describes forming particular edges 1306 in particular manners, this disclosure contemplates forming any suitable edges 1306 in any suitable manner.

In particular embodiments, an advertisement may be text (which may be HTML-linked), one or more images (which may be HTML-linked), one or more videos, audio, one or more ADOBE FLASH files, a suitable combination of these, or any other suitable advertisement in any suitable digital format presented on one or more webpages, in one or more e-mails, or in connection with search results requested by a user. In addition or as an alternative, an advertisement may be one or more sponsored stories (e.g., a news-feed or ticker item on networking system 1202). A sponsored story may be a social action by a user (such as "liking" a page, "liking" or commenting on a post on a page, RSVPing to an event associated with a page, voting on a question posted on a page, checking in to a place, using an application or playing a game, or "liking" or sharing a website) that an advertiser promotes, for example, by having the social action presented within a pre-determined area of a profile page of a user or other page, presented with additional information associated with the advertiser, bumped up or otherwise highlighted within news feeds or tickers of other users, or otherwise promoted. The advertiser may pay to have the social action promoted. As an example and not by way of limitation, advertisements may be included among the search results of a search-results page, where sponsored content is promoted over non-sponsored content.

In particular embodiments, an advertisement may be requested for display within social-networking-system webpages, third-party webpages, or other pages. An advertisement may be displayed in a dedicated portion of a page, such as in a banner area at the top of the page, in a column at the side of the page, in a GUI of the page, in a pop-up window, in a drop-down menu, in an input field of the page, over the top of content of the page, or elsewhere with respect to the page. In addition or as an alternative, an advertisement may be displayed within an application. An advertisement may be displayed within dedicated pages, requiring the user to interact with or watch the advertisement before the user may access a page or utilize an application. The user may, for example view the advertisement through a web browser.

A user may interact with an advertisement in any suitable manner. The user may click or otherwise select the advertisement. By selecting the advertisement, the user may be directed to (or a browser or other application being used by the user) a page associated with the advertisement. At the page associated with the advertisement, the user may take additional actions, such as purchasing a product or service associated with the advertisement, receiving information associated with the advertisement, or subscribing to a newsletter associated with the advertisement. An advertisement with audio or video may be played by selecting a component of the advertisement (like a "play button"). Alternatively, by selecting the advertisement, networking system 1202 may execute or modify a particular action of the user.

An advertisement may also include social-networking-system functionality that a user may interact with. As an example and not by way of limitation, an advertisement may enable a user to "like" or otherwise endorse the advertisement by selecting an icon or link associated with endorsement. As another example and not by way of limitation, an advertisement may enable a user to search (e.g., by executing a query) for content related to the advertiser. Similarly, a user may share the advertisement with another user (e.g., through networking system 1202) or RSVP (e.g., through networking system 1202) to an event associated with the advertisement. In addition or as an alternative, an advertisement may include social-networking-system context directed to the user. As an example and not by way of limitation, an advertisement may display information about a friend of the user within networking system 1202 who has taken an action associated with the subject matter of the advertisement.

In particular embodiments, networking system 1202 may determine the social-graph affinity (which may be referred to herein as "affinity") of various social-graph entities for each other. Affinity may represent the strength of a relationship or level of interest between particular objects associated with the online social network, such as users, concepts, content, actions, advertisements, other objects associated with the online social network, or any suitable combination thereof. Affinity may also be determined with respect to objects associated with third-party systems 1208 or other suitable systems. An overall affinity for a social-graph entity for each user, subject matter, or type of content may be established. The overall affinity may change based on continued monitoring of the actions or relationships associated with the social-graph entity. Although this disclosure describes determining particular affinities in a particular manner, this disclosure contemplates determining any suitable affinities in any suitable manner.

In particular embodiments, networking system 1202 may measure or quantify social-graph affinity using an affinity coefficient (which may be referred to herein as "coefficient"). The coefficient may represent or quantify the strength of a relationship between particular objects associated with the online social network. The coefficient may also represent a probability or function that measures a predicted probability that a user will perform a particular action based on the user's interest in the action. In this way, a user's future actions may be predicted based on the user's prior actions, where the coefficient may be calculated at least in part a the history of the user's actions. Coefficients may be used to predict any number of actions, which may be within or outside of the online social network. As an example and not by way of limitation, these actions may include various types of communications, such as sending messages, posting content, or commenting on content; various types of an observation actions, such as accessing or viewing profile pages, media, or other suitable content; various types of coincidence information about two or more social-graph entities, such as being in the same group, tagged in the same photograph, checked-in at the same location, or attending the same event; or other suitable actions. Although this disclosure describes measuring affinity in a particular manner, this disclosure contemplates measuring affinity in any suitable manner.

In particular embodiments, networking system 1202 may use a variety of factors to calculate a coefficient. These factors may include, for example, user actions, types of relationships between objects, location information, other suitable factors, or any combination thereof. In particular embodiments, different factors may be weighted differently when calculating the coefficient. The weights for each factor may be static or the weights may change according to, for example, the user, the type of relationship, the type of action, the user's location, and so forth. Ratings for the factors may be combined according to their weights to determine an overall coefficient for the user. As an example and not by way of limitation, particular user actions may be assigned both a rating and a weight while a relationship associated with the particular user action is assigned a rating and a correlating weight (e.g., so the weights total 100%). To calculate the coefficient of a user towards a particular object, the rating assigned to the user's actions may comprise, for example, 60% of the overall coefficient, while the relationship between the user and the object may comprise 40% of the overall coefficient. In particular embodiments, the networking system 1202 may consider a variety of variables when determining weights for various factors used to calculate a coefficient, such as, for example, the time since information was accessed, decay factors, frequency of access, relationship to information or relationship to the object about which information was accessed, relationship to social-graph entities connected to the object, short- or long-term averages of user actions, user feedback, other suitable variables, or any combination thereof. As an example and not by way of limitation, a coefficient may include a decay factor that causes the strength of the signal provided by particular actions to decay with time, such that more recent actions are more relevant when calculating the coefficient. The ratings and weights may be continuously updated based on continued tracking of the actions upon which the coefficient is based. Any type of process or algorithm may be employed for assigning, combining, averaging, and so forth the ratings for each factor and the weights assigned to the factors. In particular embodiments, networking system 1202 may determine coefficients using machine-learning algorithms trained on historical actions and past user responses, or data farmed from users by exposing them to various options and measuring responses. Although this disclosure describes calculating coefficients in a particular manner, this disclosure contemplates calculating coefficients in any suitable manner.

In particular embodiments, networking system 1202 may calculate a coefficient based on a user's actions. Networking system 1202 may monitor such actions on the online social network, on a third-party system 1208, on other suitable systems, or any combination thereof. Any suitable type of user actions may be tracked or monitored. Typical user actions include viewing profile pages, creating or posting content, interacting with content, joining groups, listing and confirming attendance at events, checking-in at locations, liking particular pages, creating pages, and performing other tasks that facilitate social action. In particular embodiments, networking system 1202 may calculate a coefficient based on the user's actions with particular types of content. The content may be associated with the online social network, a third-party system 1208, or another suitable system. The content may include users, profile pages, posts, news stories, headlines, instant messages, chat room conversations, emails, advertisements, pictures, video, music, other suitable objects, or any combination thereof. Networking system 1202 may analyze a user's actions to determine whether one or more of the actions indicate an affinity for subject matter, content, other users, and so forth. As an example and not by way of limitation, if a user may make frequently posts content related to "coffee" or variants thereof, networking system 1202 may determine the user has a high coefficient with respect to the concept "coffee". Particular actions or types of actions may be assigned a higher weight and/or rating than other actions, which may affect the overall calculated coefficient. As an example and not by way of limitation, if a first user emails a second user, the weight or the rating for the action may be higher than if the first user simply views the user-profile page for the second user.

In particular embodiments, networking system 1202 may calculate a coefficient based on the type of relationship between particular objects. Referencing the social graph 1300, networking system 1202 may analyze the number and/or type of edges 1306 connecting particular user nodes 1302 and concept nodes 1304 when calculating a coefficient. As an example and not by way of limitation, user nodes 1302 that are connected by a spouse-type edge (representing that the two users are married) may be assigned a higher coefficient than a user node 1302 that are connected by a friend-type edge. In other words, depending upon the weights assigned to the actions and relationships for the particular user, the overall affinity may be determined to be higher for content about the user's spouse than for content about the user's friend. In particular embodiments, the relationships a user has with another object may affect the weights and/or the ratings of the user's actions with respect to calculating the coefficient for that object. As an example and not by way of limitation, if a user is tagged in first photo, but merely likes a second photo, networking system 1202 may determine that the user has a higher coefficient with respect to the first photo than the second photo because having a tagged-in-type relationship with content may be assigned a higher weight and/or rating than having a like-type relationship with content. In particular embodiments, networking system 1202 may calculate a coefficient for a first user based on the relationship one or more second users have with a particular object. In other words, the connections and coefficients other users have with an object may affect the first user's coefficient for the object. As an example and not by way of limitation, if a first user is connected to or has a high coefficient for one or more second users, and those second users are connected to or have a high coefficient for a particular object, networking system 1202 may determine that the first user should also have a relatively high coefficient for the particular object. In particular embodiments, the coefficient may be based on the degree of separation between particular objects. The lower coefficient may represent the decreasing likelihood that the first user will share an interest in content objects of the user that is indirectly connected to the first user in the social graph 1300. As an example and not by way of limitation, social-graph entities that are closer in the social graph 1300 (i.e., fewer degrees of separation) may have a higher coefficient than entities that are further apart in the social graph 1300.

In particular embodiments, networking system 1202 may calculate a coefficient based on location information. Objects that are geographically closer to each other may be considered to be more related, or of more interest, to each other than more distant objects. In particular embodiments, the coefficient of a user towards a particular object may be based on the proximity of the object's location to a current location associated with the user (or the location of a client device 1206 of the user). A first user may be more interested in other users or concepts that are closer to the first user. As an example and not by way of limitation, if a user is one mile from an airport and two miles from a gas station, networking system 1202 may determine that the user has a higher coefficient for the airport than the gas station based on the proximity of the airport to the user.

In particular embodiments, networking system 1202 may perform particular actions with respect to a user based on coefficient information. Coefficients may be used to predict whether a user will perform a particular action based on the user's interest in the action. A coefficient may be used when generating or presenting any type of objects to a user, such as advertisements, search results, news stories, media, messages, notifications, or other suitable objects. The coefficient may also be utilized to rank and order such objects, as appropriate. In this way, networking system 1202 may provide information that is relevant to user's interests and current circumstances, increasing the likelihood that they will find such information of interest. In particular embodiments, networking system 1202 may generate content based on coefficient information. Content objects may be provided or selected based on coefficients specific to a user. As an example and not by way of limitation, the coefficient may be used to generate media for the user, where the user may be presented with media for which the user has a high overall coefficient with respect to the media object. As another example and not by way of limitation, the coefficient may be used to generate advertisements for the user, where the user may be presented with advertisements for which the user has a high overall coefficient with respect to the advertised object. In particular embodiments, networking system 1202 may generate search results based on coefficient information. Search results for a particular user may be scored or ranked based on the coefficient associated with the search results with respect to the querying user. As an example and not by way of limitation, search results corresponding to objects with higher coefficients may be ranked higher on a search-results page than results corresponding to objects having lower coefficients.

In particular embodiments, networking system 1202 may calculate a coefficient in response to a request for a coefficient from a particular system or process. To predict the likely actions a user may take (or may be the subject of) in a given situation, any process may request a calculated coefficient for a user. The request may also include a set of weights to use for various factors used to calculate the coefficient. This request may come from a process running on the online social network, from a third-party system 1208 (e.g., via an API or other communication channel), or from another suitable system. In response to the request, networking system 1202 may calculate the coefficient (or access the coefficient information if it has previously been calculated and stored). In particular embodiments, networking system 1202 may measure an affinity with respect to a particular process. Different processes (both internal and external to the online social network) may request a coefficient for a particular object or set of objects. Networking system 1202 may provide a measure of affinity that is relevant to the particular process that requested the measure of affinity. In this way, each process receives a measure of affinity that is tailored for the different context in which the process will use the measure of affinity.

In connection with social-graph affinity and affinity coefficients, particular embodiments may utilize one or more systems, components, elements, functions, methods, operations, or steps disclosed in U.S. Patent Application No. 11/503093, filed 11 August 2006, U.S. Patent Application No. 12/977027, filed 22 December 2010, U.S. Patent Application No. 12/978265, filed 23 December 2010, and U.S. Patent Application No. 13/632869, field 01 October 2012, each of which is incorporated by reference.

In particular embodiments, one or more of the content objects of the online social network may be associated with a privacy setting. The privacy settings (or "access settings") for an object may be stored in any suitable manner, such as, for example, in association with the object, in an index on an authorization server, in another suitable manner, or any combination thereof. A privacy setting of an object may specify how the object (or particular information associated with an object) can be accessed (e.g., viewed or shared) using the online social network. Where the privacy settings for an object allow a particular user to access that object, the object may be described as being "visible" with respect to that user. As an example and not by way of limitation, a user of the online social network may specify privacy settings for a user-profile page identify a set of users that may access the work experience information on the user-profile page, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access photos albums associated with the user, thus excluding those users from accessing the photo albums (while also possibly allowing certain users not within the set of users to access the photo albums). In particular embodiments, privacy settings may be associated with particular social-graph elements. Privacy settings of a social-graph element, such as a node or an edge, may specify how the social-graph element, information associated with the social-graph element, or content objects associated with the social-graph element can be accessed using the online social network. As an example and not by way of limitation, a particular concept node 1304 corresponding to a particular photo may have a privacy setting specifying that the photo may only be accessed by users tagged in the photo and their friends. In particular embodiments, privacy settings may allow users to opt in or opt out of having their actions logged by networking system 1202 or shared with other systems (e.g., third-party system 1208). In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of third-party systems 1208, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, one or more servers may be authorization/privacy servers for enforcing privacy settings. In response to a request from a user (or other entity) for a particular object stored in a data store, networking system 1202 may send a request to the data store for the object. The request may identify the user associated with the request and may only be sent to the user (or a client device 1206 of the user) if the authorization server determines that the user is authorized to access the object based on the privacy settings associated with the object. If the requesting user is not authorized to access the object, the authorization server may prevent the requested object from being retrieved from the data store, or may prevent the requested object from be sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

The foregoing specification is described with reference to specific exemplary embodiments thereof. Various embodiments and aspects of the disclosure are described with reference to details discussed herein, and the accompanying drawings illustrate the various embodiments. The description above and drawings are illustrative and are not to be construed as limiting. Numerous specific details are described to provide a thorough understanding of various embodiments.

The additional or alternative embodiments may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method comprising:
providing, from a mobile computing device and to a networking system, characteristic data, wherein the characteristic data comprises characteristic data associated with the mobile computing device, and characteristic data associated with a user of the mobile computing device;
receiving, from the networking system, one or more augmented reality elements that correspond to the provided characteristic data;
determining, based on an analysis of a plurality of display factors, a subset of the received one or more augmented reality elements; and
displaying, on a camera viewfinder display of the mobile computing device, the subset of the received one or more augmented reality elements.

2. The method as recited in claim 1, wherein the characteristic data associated with the mobile computing device comprises location information associated with the mobile computing device.

3. The method as recited in claim 1 or 2, wherein characteristic data associated with the user of the mobile computing device comprises one or more of a networking system unique identifier associated with the user of the mobile computing device, application usage history associated with the user of the mobile computing device, or contact information associated with the user of the mobile computing device.

4. The method as recited in any of claims 1 to 3, wherein the one or more augmented reality elements that correspond to the provided characteristic data comprise one or more of an augmented reality element that correlates with the location information associated with the mobile computing device, an augmented reality element that correlates with demographic information associated with the user of the mobile computing device, or an augmented reality element that correlates with networking system information associated with the user of the mobile computing device.

5. The method as recited in any of claims 1 to 4, further comprising identifying the plurality of display factors, wherein the plurality of display factors comprise one or more of a resolution of the camera viewfinder display, a level of crowded-ness in an image frame taken from an image feed displayed within the camera viewfinder display, an analysis of networking system information associated with the user of the mobile computing device, or an analysis of metadata associated with each of the one or more received augmented reality elements.

6. The method as recited in any of claims 1 to 5, further comprising mapping each of the subset of the received one or more augmented reality elements to a point within the camera viewfinder display.

7. The method as recited in any of claims 1 to 6, further comprising:
detecting movement of the mobile computing device; and
updating the camera viewfinder display such that each of the subset of received one or more augmented reality elements remains anchored to the mapped point associated with that augmented reality element.

8. The method as recited in any of claims 1 to 7, further comprising:
detecting an interaction with a particular augmented reality element in the displayed subset of the received one or more augmented reality elements; and
redirecting a display of the mobile computing device to a networking system application GUI comprising information associated with the particular augmented reality element.

9. The method as recited in any of claims 1 to 8, further comprising:
organizing, based on metadata associated with each augmented reality element in the subset, the subset of augmented reality elements into one or more categories; and
wherein displaying the subset of the received one or more augmented reality elements comprises displaying only one of the one or more categories of augmented reality elements within the camera viewfinder display at a time.

10. A system comprising:
at least one processor; and
at least one non-transitory computer-readable storage medium storing instructions thereon that, when executed by the at least one processor, cause the system to:
maintain a plurality of augmented reality elements;
receive, from a mobile computing device, a plurality of characteristic data,
wherein the characteristic data comprises characteristic data associated with the mobile computing device, and characteristic data associated with a user of the mobile computing device;
identify, from the maintained plurality of augmented reality elements, one or more augmented reality elements that correspond to the received characteristic data; and
provide, to the mobile computing device and for display within a camera viewfinder display of the mobile computing device, the identified one or more augmented reality elements.

11. The system as recited in claim 10, wherein the instructions that, when executed by the at least one processor, cause the system to identify one or more augmented reality elements that correspond to the received characteristic data further comprise instructions that cause the system to:
analyze the received characteristic data to determine a location of the mobile computing device; and
identify one or more augmented reality elements that correspond to the location of the mobile computing device.

12. A method, in particular according to any of claims 1 to 9, comprising:
maintaining, by one or more server devices, a plurality of augmented reality elements;
receiving, from a mobile computing device, characteristic data, wherein the characteristic data comprises characteristic data associated with the mobile computing device, and characteristic data associated with a user of the mobile computing device;
identifying, from the maintained plurality of augmented reality elements, one or more augmented reality elements that correspond to the received characteristic data; and
providing, to the mobile computing device and for display within a camera viewfinder display of the mobile computing device, the identified one or more augmented reality elements.

13. The method as recited in claim 12, wherein maintaining the plurality of augmented reality elements further comprises maintaining metadata for each of the plurality of augmented reality elements, wherein the metadata for each of the plurality of augmented reality elements comprises mapping requirements for each augmented reality element, and networking system information specific to each augmented reality element; and/or
wherein characteristic data associated with the mobile computing device comprises location information associated with the mobile computing device; and/or
wherein characteristic data associated with the user of the mobile computing device comprises one or more of a networking system unique identifier associated with the user of the mobile computing device, application usage history associated with the user of the mobile computing device, or contact information associated with the user of the mobile computing device.

14. The method as recited in claim 12 or 13, wherein identifying one or more augmented reality elements that correspond to the received characteristic data comprises:
analyzing the received characteristic data to determine a location of the mobile computing device; and
identifying one or more augmented reality elements that correspond to the location of the mobile computing device;
optionally wherein analyzing the received characteristic data to determine the location of the mobile computing device comprises analyzing one or more of GPS information, WiFi information, networking system information, or Internet searches in order to determine the location of the mobile computing device;
optionally wherein identifying one or more augmented reality elements that correspond to the received characteristic data further comprises:
analyzing the received characteristic data to determine user characteristics comprising demographic information associated with the user of the mobile computing device, networking system profile information associated with the user of the mobile computing device, networking system activity history associated with the user of the mobile computing device, and networking system activity history associated with one or more co-users of the user of the mobile computing device; and
identifying one or more augmented reality elements that correspond to the determined user characteristics;
optionally wherein identifying one or more augmented reality elements that correspond to the received characteristic data further comprises calculating a score for each of the one or more augmented reality elements that represents a correlation strength between the augmented reality element and the received characteristic data.

15. The method as recited in any of claims 12 to 14, further comprising:
receiving data representative of a leave-behind augmented reality element,
wherein the data comprises content of the leave-behind augmented reality element, and an anchor location associated with the leave-behind augmented reality element;
generating the leave-behind augmented reality element comprising the received data;
detecting when a networking system user associated with the user of the mobile computing device enters the anchor location; and
providing the leave-behind augmented reality element to the networking system user.
